# EUROPEAN PATENT SPECIFICATION

(11) **EP 4 209 890 B1**
(45) Date of publication and mention of the grant of the patent: **25.03.2026**
(21) Application number: 21871528.2
(22) Date of filing: 23.09.2021
(51) Int. Cl.: G06F 3/0486, G06F 3/04883, G06F 3/14, G09G 5/14, G09G 5/12

(54) **FILE TRANSMISSION METHOD AND RELATED DEVICE**
DATEIÜBERTRAGUNGSVERFAHREN UND ZUGEHÖRIGE VORRICHTUNG
PROCÉDÉ DE TRANSMISSION DE FICHIER ET DISPOSITIF ASSOCIÉ

(30) Priority: 28.09.2020 CN 202011045443
(43) Date of publication of application: 12.07.2023
(73) Proprietor: Huawei Technologies Co., Ltd., Shenzhen, Guangdong 518129 (CN)
(72) Inventor: WEI, Fanxiang, Shenzhen, Guangdong 518129 (CN); ZHOU, Xueer, Shenzhen, Guangdong 518129 (CN); LU, Yuedong, Shenzhen, Guangdong 518129 (CN)
(74) Representative: Gill Jennings & Every LLP
(86) International application number: PCT/CN2021/119830
(87) International publication number: WO 2022/063159

(56) References cited:
- EP-A1- 2 632 188
- CN-A- 107 425 942
- CN-A- 110 602 805
- CN-A- 110 618 970
- CN-A- 110 703 966
- CN-A- 112 527 221
- US-A1- 2015 356 949
- MARQUARDT NICOLAI ET AL: "Gradual engagement facilitating information exchange between digital devices as a function of proximity", PROCEEDINGS OF THE THIRD ACM CONFERENCE ON DATA AND APPLICATION SECURITY AND PRIVACY, CODASPY '13, ACM PRESS, NEW YORK, NEW YORK, USA, 11 November 2012 (2012-11-11), pages 31 - 40, XP058985017, ISBN: 978-1-4503-1890-7, DOI: 10.1145/2396636.2396642

## Description

### TECHNICAL FIELD

The present invention relates to the field of terminals, and in particular, to a file transmission method and a related device.

### BACKGROUND

With development of science and technology, intelligent terminal devices such as smartphones, personal computers, and tablets are used more widely. In an actual office scenario, a user wants to share a file resource among different intelligent terminal devices, to implement multi-screen interaction between the different devices. This effectively improves efficiency of transmitting a file resource among a plurality of devices.

Currently, in the conventional technology, there are two common file sharing methods, in which an inter-device connection is established by using a device collaboration technology and a WiFi-P2P direct connection technology, to implement file sharing. In a case that a collaboration is established between two devices by using the device collaboration technology, cross-device dragging and transmission of a file can be implemented. For example, when dragging of a file is initiated on a first device, the dragged file carries related information to a second device when leaving the first device, and the second device performs corresponding processing. After a point-to-point connection between intelligent terminal devices is established by using the WiFi-P2P technology, a file having a large amount of data is transmitted by using a Wi-Fi network, and a file having a small amount of data is transmitted by using a Bluetooth channel.

However, the foregoing two file sharing technologies are usually established only between two devices, and file dragging and file transmission are performed only between the two devices. For some diversified or complex application scenarios (for example, file sharing among a plurality of devices), no better file sharing experience can be provided at present.

EP 2632188 A1 discloses a computer implemented method performed by an electronic device comprising a display and an input device for receiving user input. The method comprises maintaining a representation of at least one other electronic device and its position relative to the electronic device and receiving a user input indicative of a direction and associated with a function requiring a target device. In response to said user input, the direction indicated by the user input and the representation of the relative position of the at least one other electronic device are utilised to determine the target device.

### SUMMARY

A technical problem to be resolved by embodiments of the present invention is to provide a file transmission method and a related device, thereby improving user experience and efficiency of sharing a file among a plurality of devices. The invention is defined by the independent claims. Further aspects of the invention are outlined in the dependent claims.

According to a first aspect, a file transmission method is provided in accordance with appended claim 1.

In this embodiment of the present invention, there may be three or more devices in the multi-device collaboration system. If file transmission needs to be performed among these devices, a target file is selected on a first interface of a first device, and a drag operation is operation for the target file, where the drag operation includes but is not limited to dragging the target file by touching a screen, and dragging the target file by using a peripheral component such as a mouse. At the same time, the first device sends a broadcast message to notify all of the other devices in the system that the target file is to be shared currently, so that all the devices in the system monitor a release position of the drag operation. This can make all the devices in the system get ready to receive the target file. Further, after detecting the release position of the drag operation, the first device can control the target file to be sent to a device matching the release position. By implementing the method in this embodiment of the present invention, each device in the multi-device collaboration system can send or receive the target file without interrupting a collaboration, which avoids the following phenomenon: When file transmission is performed between two devices that do not establish a collaboration with each other, the file transmission is implemented by interrupting collaborations that have been established between the two devices and another device, and establishing a new collaboration. Therefore, file transmission among a plurality of devices is implemented, which not only improves file transmission efficiency in multi-device collaboration, but also simplifies user operations.

In a possible implementation, the target file is a file stored in the first device, and a start position of the first drag operation is on the display interface. Alternatively, the target file is a file stored in a start second device in the M second devices, and a start position of the first drag operation is in a collaboration window corresponding to the start second device. In this embodiment of the present invention, the first interface includes the display interface of the first device and the collaboration window corresponding to the M second devices; and the drag operation is performed on the first interface for the target file. If the target file is on the display interface of the first device, and the target file is dragged on the display interface of the first device instead of being dragged on the collaboration window corresponding to the M second devices, it is indicated that the target file is stored in the first device, and it is determined that the first device can send the target file. In another case, if the target file is on the collaboration window corresponding to one of the devices, and the target file is dragged on the collaboration window instead of being dragged on the display interface of the first device, it is indicated that the target file is stored in the device corresponding to the collaboration window, and it is determined that the first device can control the device corresponding to the collaboration window to send the target file.

In a possible implementation, the target file is a file stored in the first device. The controlling the target file to be sent to a device in the N devices that matches the release position includes: when it is detected that the release position of the first drag operation is on a display interface of a third device, or when it is detected that the release position of the first drag operation is in a collaboration window that corresponds to the third device and that is on another device in the N devices, controlling the first device to send the target file to the third device, where the third device includes a device that is in the N devices and that does not establish a collaboration with the first device. In this embodiment of the present invention, after the target file is dragged on the first interface of the first device, if the target file is released on a display interface of any device in the multi-device collaboration system or on a collaboration window corresponding to the device, it is indicated that the target file needs to be sent to the device matching the release position, where the device may not need to establish a collaboration with the first device. For example, in a case that a tablet establishes a collaboration with a mobile phone, the tablet has a collaboration window corresponding to the mobile phone, and the tablet establishes a collaboration with a computer, a user can perform, on a screen of the tablet, a drag operation for a to-be-shared file in the collaboration window corresponding to the mobile phone, and send the to-be-shared file to the computer. Therefore, in a case that the first device does not need to interrupt a collaboration with another device, file transmission between devices that do not establish a collaboration with each other can be implemented by performing the drag operation for the target file.

In a possible implementation, the method further includes: obtaining file information of the target file, where the file information includes a file name, file content, and file size information of the target file; determining whether the device matching the release position meets a condition for receiving the target file; and determining, if the condition is met, a storage path by which the device matching the release position receives the target file. In this embodiment of the present invention, if file sharing between two devices is implemented by performing the drag operation for the target file, a sending device (a device that stores the target file, for example, the first device or one of the M second devices) needs to determine whether a receiving device has enough storage space to store the target file. Therefore, after obtaining the file information of the target file, the sending device may first send a size of the target file to the receiving device, determine whether the device has space to store the target file, determine a storage path that is for the target file and that is on the receiving device if the device has enough storage space, and then can successfully send the target file to the storage path.

In a possible implementation, the controlling the first device to send the target file to the third device includes: establishing a data transmission channel, where the data transmission channel is used to transmit the file information of the target file; and if the first device establishes a direct connection to the third device, sending the file information to a storage path of the third device through the data transmission channel; or if the first device establishes an indirect connection to the third device, sending the file information to a relay device through the data transmission channel, and forwarding the file information to a storage path of the third device by using the relay device, where the relay device is a device that establishes both a direct connection to the first device and a direct connection to the third device. In this embodiment of the present invention, because different networking technologies are used in the multi-device collaboration system, more devices can be connected without interrupting an inter-device collaboration. However, different networking technologies may have different networking modes, which may cause a change of an inter-device connection relationship. When the first device is used as a sending device, and the third device is used as a receiving device, the first device and the third device may establish a direct connection or an indirect connection in different networking modes. If the first device establishes a direct connection to the third device (for example, all devices are connected by using an ad hoc networking technology), the first device may directly send the file information of the target file to the third device. If the first device does not establish a direct connection to the third device, but establishes an indirect connection (for example, a one-to-many connection between devices that is implemented by using a WiFi-P2P technology for networking) to the third device by using a relay device (a device that is in the N devices in the multi-device collaboration system and that can establish both a direct connection to the first device and a direct connection to the third device), the first device first sends the file information of the target file to the relay device, and the relay device then forwards the file information of the target file to the third device, thereby implementing file transmission among a plurality of devices.

In a possible implementation, the target file is a file stored in the start second device in the M second devices. The controlling the target file to be sent to a device in the N devices that matches the release position includes: when it is detected that the release position of the first drag operation is on a display interface of a third device, or when it is detected that the release position of the first drag operation is in a collaboration window that corresponds to the third device and that is on another device in the N devices, controlling the start second device to send the target file to the third device. In this embodiment of the present invention, after the target file in the collaboration window is dragged on the first interface, if the target file is released on a display interface of any device in the multi-device collaboration system or on a collaboration window corresponding to the device, it is indicated that the target file needs to be sent to the device matching the release position. Optionally, the third device may be one device in the M second devices. For example, when a computer establishes collaborations with both a mobile phone and a tablet, the computer has collaboration windows corresponding to the mobile phone and the tablet, and the mobile phone does not need to establish a collaboration with the tablet, a user may select a file in the collaboration window corresponding to the tablet, and drag the file to the collaboration window corresponding to the mobile phone. In this case, the file on the tablet can be directly shared to the mobile phone by performing the drag operation. Therefore, in a case that interrupting a collaboration with another device is not required, file transmission between devices that do not establish a collaboration with each other is implemented by performing the drag operation for the target file. This simplifies file transmission operations.

In a possible implementation, the controlling the start second device to send the target file to the third device includes: establishing a data transmission channel, where the data transmission channel is used to transmit the file information of the target file; and if the start second device establishes a direct connection to the third device, sending, through the data transmission channel, the file information to the storage path of the device matching the release position; or if the start second device establishes an indirect connection to the third device, sending the file information to a relay device through the data transmission channel, and forwarding the file information to a storage path of the device matching the release position by using the relay device, where the relay device is a device that establishes both a direct connection to the start second device and a direct connection to the third device. In this embodiment of the present invention, because different networking technologies are used in the multi-device collaboration system, more devices can be connected without interrupting an inter-device collaboration. However, different networking technologies may have different networking modes, which may cause a change of an inter-device connection relationship. When the start second device is used as a sending device, the start second device and the third device may establish a direct connection or an indirect connection in different networking modes. If the start second device can establish a direct connection to the third device (for example, networking is performed by using an ad hoc networking technology), the start second device can directly send the file information of the target file to the third device. If the start second device does not establish a direct connection to the third device, but establishes an indirect connection (for example, a one-to-many connection between devices that is implemented by using a WiFi-P2P technology for networking) to the third device by using a relay device (for example, the first device), the start second device first sends the file information of the target file to the relay device, and the relay device then forwards the file information of the target file to the third device, thereby implementing file transmission among a plurality of devices.

In a possible implementation, the method further includes: obtaining first information of the target file, where the first information includes one or more of file type information, file quantity information, and file arrangement sequence information of the target file; generating a drag effect set of the target file based on the first information; and displaying, based on the drag effect set of the target file, a drag effect matching a fourth device, where the fourth device is a device through which a drag track of the first drag operation passes, or a device corresponding to a collaboration window on the device through which the drag track of the first drag operation passes. In this embodiment of the present invention, in a process of performing the drag operation for the target file, the target file may be dragged across devices, and the drag track may pass by a plurality of devices, where the plurality of devices are the fourth device. Different devices may have different operating systems. For example, if the drag track passes through a mobile phone and a computer, the mobile phone runs an Android system, but the computer runs a Windows system. For different operating systems, file drag effects corresponding to the operating systems are displayed in a process of dragging the target file. By using the method in this embodiment of the present invention, after information related to the target file such as the file type information and the file quantity information of the target file is obtained, a drag effect set may be generated based on the information, where the drag effect set includes one or more file drag effects. Then, a corresponding file drag effect is displayed based on an operating system of a device through which the drag track passes.

According to a second aspect, a file transmission method is provided in accordance with appended claim 9. In this embodiment of the present invention, there may be three or more devices in the multi-device collaboration system. If file transmission needs to be performed among these devices, sharing of the target file is initiated on the first device, and the third device receives the notification that is initiated by the first device and that is for monitoring the release position of the target file. In this case, the third device gets ready for receiving the target file. When detecting that the target file is released on the third device, the first device may control the target file to be sent to the third device. In this case, the third device receives the target file. After successfully receiving the target file, the third device sends the broadcast to notify another device in the multi-device collaboration system that the target file has been successfully received and that a wait for receiving is not required any more. By implementing the method in this embodiment of the present invention, each device in the multi-device collaboration system can receive the target file without interrupting a collaboration, which avoids the following phenomenon: When file transmission is performed between two devices that do not establish a collaboration with each other, the file transmission is implemented by interrupting collaborations that have been established between the two devices and the another device, and establishing a new collaboration. Therefore, file transmission among a plurality of devices is implemented, which not only improves file transmission efficiency in multi-device collaboration, but also simplifies user operations.

In a possible implementation, the receiving the target file that is sent under control of the first device includes: establishing a data transmission channel with a device that stores the target file; and receiving file information of the target file, where the file information includes a file name, file content, and file size information of the target file. In this embodiment of the present invention, the third device receives the size information that is sent by a sending device and that is of the target file. After it is determined that the third device has enough space to receive the target file, the third device can receive the file information of the target file.

According to a third aspect, an embodiment of the present invention provides an electronic device. The electronic device includes a processor. The processor is configured to support the electronic device in implementing a corresponding function in the file transmission method according to the first aspect or second aspect. The electronic device may further include a memory. The memory is configured to be coupled to the processor, and stores program instructions and data that are necessary for the electronic device. The electronic device may further include a communication interface, configured to enable the electronic device to communicate with another device or a communication network.

According to a fourth aspect, this application provides a computer storage medium. The computer storage medium stores a computer program. When the computer program is executed by a processor, a process of the file transmission method according to any one of the implementations of the first or second aspect is implemented.

### BRIEF DESCRIPTION OF DRAWINGS

FIG. 1A is a schematic diagram of a structure of an electronic device according to an embodiment of this application;
FIG. 1B is a block diagram of a software structure of an electronic device according to an embodiment of this application;
FIG. 2 is a schematic diagram of a file transmission system architecture according to an embodiment of this application;
FIG. 3 is a schematic diagram of a file transmission system architecture of any device in N devices according to an embodiment of the present invention;
FIG. 4 is a schematic flowchart of a file transmission method according to an embodiment of this application;
FIG. 5A is a schematic diagram of a multi-device collaboration system (for example, a collaboration system having three devices) according to an embodiment of the present invention;
FIG. 5B is a schematic diagram of initiating dragging of a file on a first device in a multi-device collaboration system (for example, a collaboration system having three devices) according to an embodiment of the present invention;
FIG. 5C is a schematic diagram of a release position of a first drag operation in a multi-device collaboration system (for example, a collaboration system having three devices) according to an embodiment of the present invention;
FIG. 5D is a schematic diagram of sending a target file in a multi-device collaboration system (for example, a collaboration system having three devices) according to an embodiment of the present invention;
FIG. 6 is a detailed schematic flowchart of a file transmission method according to an embodiment of this application;
FIG. 7A is a schematic diagram of a multi-device collaboration system (for example, a collaboration system having five devices) according to an embodiment of the present invention;
FIG. 7B is a schematic diagram of a target file in a multi-device collaboration system (for example, a collaboration system having five devices) according to an embodiment of the present invention;
FIG. 7C is a schematic diagram of a drag effect in a multi-device collaboration system (for example, a collaboration system having five devices) according to an embodiment of the present invention;
FIG. 7D is a schematic diagram of a release position of a first drag operation in a multi-device collaboration system (for example, a collaboration system having five devices) according to an embodiment of the present invention;
FIG. 7E is a schematic diagram of dragging a file in a multi-device collaboration system (for example, a collaboration system having five devices) according to an embodiment of the present invention;
FIG. 8 is a schematic diagram of a structure of a file transmission apparatus according to an embodiment of the present invention; and
FIG. 9 is a schematic diagram of a structure of another file transmission apparatus according to an embodiment of the present invention.

### DESCRIPTION OF EMBODIMENTS

Terms used in the following embodiments of this application are merely intended to describe specific embodiments, but are not intended to limit this application. The terms "one", "a", "the", "the foregoing", "this", and "the one" of singular forms used in this specification and the appended claims of this application are also intended to include plural forms, unless otherwise specified in the context clearly. It should also be understood that, the term "and/or" used in this application indicates and includes any or all possible combinations of one or more listed items.

The following describes an electronic device, a user interface used in such an electronic device, and embodiments for using such an electronic device. In some embodiments, the electronic device may be a portable electronic device that further includes another function such as a personal digital assistant function and/or a music player function, for example, a mobile phone, a tablet computer, or a wearable electronic device (such as a smartwatch) with a wireless communication function. An example embodiment of a portable electronic device includes but is not limited to a portable electronic device with iOS^{®}, Android^{®}, Microsoft^{®}, or another operating system. Alternatively, the portable electronic device may be another portable electronic device, for example, a laptop computer (Laptop) having a touch-sensitive surface or a touch panel. It should be further understood that, in some other embodiments, the foregoing electronic device may alternatively be a desktop computer having a touch-sensitive surface or a touch panel, rather than a portable electronic device.

The term "user interface (user interface, UI)" in the specification, claims, and accompanying drawings of this application is a medium interface for interaction and information exchange between an application program or an operating system and a user, and implements conversion between an internal form of information and a form acceptable to the user. A user interface of the application program is source code written in a specific computer language such as Java or extensible markup language (extensible markup language, XML). The interface source code is parsed and rendered on a terminal device, and finally presented as content that can be identified by the user, for example, a control such as an image, a text, or a button. A control (control), also called a widget (widget), is a basic element of a user interface. Typical controls include a toolbar (toolbar), a menu bar (menu bar), a text box (text box), a button (button), a scrollbar (scrollbar), an image, and a text. Attributes and content of controls in an interface are defined by tags or nodes. For example, XML uses nodes such as <Textview>, <ImgView>, and <VideoView> to specify the controls in the interface. One node corresponds to one control or attribute in an interface. After being parsed and rendered, the node is presented as content visible to users. In addition, interfaces of many application programs, such as hybrid applications (hybrid applications), usually further include web pages. A web page, also referred to as a page, may be understood as a special control embedded in an interface of an application program. A web page is source code written in a specific computer language, for example, Hypertext Markup Language (hypertext markup language, GTML), cascading style sheets (cascading style sheets, CSS), and JavaScript (JavaScript, JS). For example, the web page source code may be loaded and displayed as user-recognizable content by a browser or a web page display component having a function similar to that of the browser. Specific content included in the web page is also defined by using a tag or a node in the source code of the web page. For example, GTML defines an element and an attribute of the web page by using <p>, <img>, <video>, and <canvas>.

A common representation form of a user interface is a graphical user interface (graphical user interface, GUI), namely, a user interface related to a computer operation and displayed in the form of a graph. A graphical user interface may be an interface element such as an icon, a window, or a control displayed in a display of an electronic device. The control may include a visual interface element such as an icon, a button, a menu, a tab, a text box, a dialog box, a status bar, a navigation bar, or a widget.

First, an example of an electronic device 100 provided in the following embodiments of this application is described.

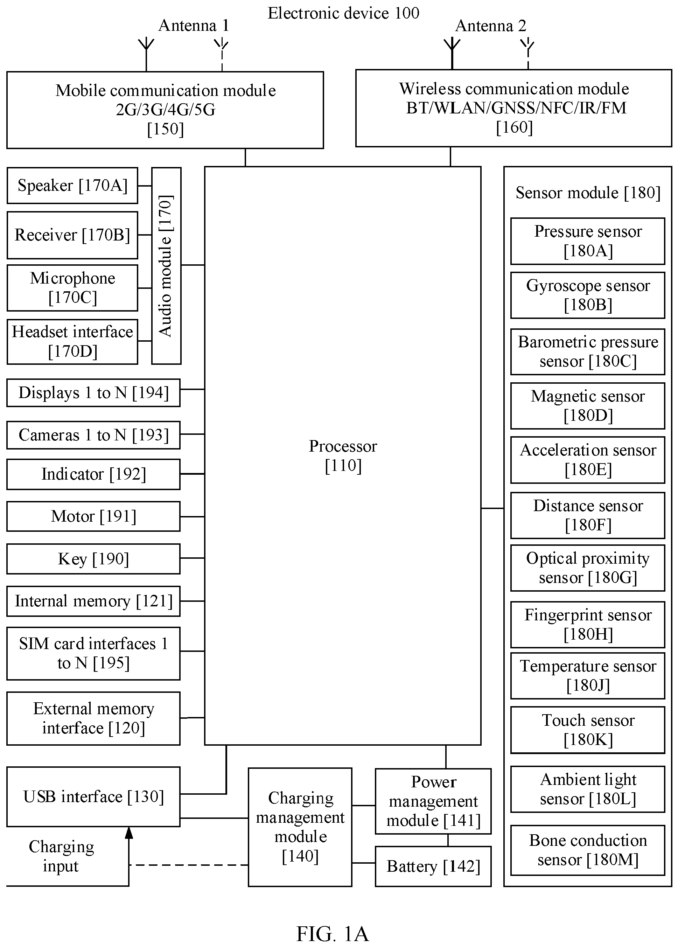

FIG. 1A is a schematic diagram of a structure of the electronic device 100.

The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset interface 170D, a sensor module 180, a key 190, a motor 191, an indicator 192, a 3D camera module 193, a display 194, a subscriber identification module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure illustrated in this embodiment of the present invention does not constitute a specific limitation on the electronic device 100. In some other embodiments of this application, the electronic device 100 may include more or fewer components than those shown in the figure, or some components may be combined or split, or there may be a different component arrangement. The components shown in the figure may be implemented by using hardware, software, or a combination of software and hardware.

The processor 110 may include one or more processing units. For example, the processor 110 may include an application processor (application processor, AP), a central processing unit (central processing unit, CPU), a graphics processing unit (graphics processing unit, GPU), a neural-network processing unit (neural-network processing unit, NPU), a modem processor, an image signal processor (image signal processor, ISP), a controller, a memory, a video codec, a digital signal processor (digital signal processor, DSP), a baseband processor, and the like. Different processing units may be independent devices, or may be integrated into one or more processors. In some embodiments, the electronic device 100 may further include one or more processors 110.

The controller may be a nerve center and a command center of the electronic device 100. The controller may generate an operation control signal based on instruction operation code and a time sequence signal, to complete control of instruction reading and instruction execution.

The processor 110 may be further provided with a memory, configured to store instructions and data. In some embodiments, the memory in the processor 110 is a cache. The memory may store instructions or data that has just been used or used repeatedly by the processor 110. If the processor 110 needs to use the instructions or data again, the processor may directly invoke the instructions or data from the memory. This avoids repeated access, and reduces waiting time of the processor 110, thereby improving efficiency of the electronic device 100.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronization serial bus, and includes one serial data line (serial data line, SDA) and one serial clock line (derail clock line, SCL). In some embodiments, the processor 110 may include a plurality of groups of I2C buses. The processor 110 may be separately coupled to the touch sensor 180K, a charger, a flash, the 3D camera module 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the electronic device 100.

The I2S interface may be used for audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communication module 160 through the I2S interface, to implement a function of answering a call by using a Bluetooth headset.

The PCM interface may also be used for audio communication, as well as analog signal sampling, quantization, and coding. In some embodiments, the audio module 170 may be coupled to the wireless communication module 160 through a PCM bus interface. In some embodiments, the audio module 170 may alternatively transmit an audio signal to the wireless communication module 160 through the PCM interface, to implement a function of answering a call by using a Bluetooth headset. Both the I2S interface and the PCM interface may be used for audio communication.

The UART interface is a universal serial data bus, and is used for asynchronous communication. The bus may be a two-way communication bus. The bus converts to-be-transmitted data between serial communication and parallel communication. In some embodiments, the UART interface is usually used to connect the processor 110 to the wireless communication module 160. For example, the processor 110 communicates with a Bluetooth module in the wireless communication module 160 through the UART interface, to implement a Bluetooth function. In some embodiments, the audio module 170 may transmit an audio signal to the wireless communication module 160 through the UART interface, to implement a function of playing music by using a Bluetooth headset.

The MIPI interface may be configured to connect the processor 110 to a peripheral component such as the display 194 or the 3D camera module 193. The MIPI interface includes a camera serial interface (camera serial interface, CSI), a display serial interface (display serial interface, DSI), and the like. In some embodiments, the processor 110 communicates with the 3D camera module 193 through the CSI, to implement a camera function of the electronic device 100. The processor 110 communicates with the display 194 through the DSI, to implement a display function of the electronic device 100.

The GPIO interface may be configured by using software. The GPIO interface may be configured as a control signal, or may be configured as a data signal. In some embodiments, the GPIO interface may be configured to connect the processor 110 to the 3D camera module 193, the display 194, the wireless communication module 160, the audio module 170, the sensor module 180, or the like. The GPIO interface may be further configured as the I2C interface, the I2S interface, the UART interface, the MIPI interface, or the like.

The USB interface 130 is an interface conforming to a USB standard specification, and may be specifically a mini USB interface, a micro USB interface. a USB Type-C interface, or the like. The USB interface 130 may be configured to connect to a charger to charge the electronic device 100, or may be configured to transmit data between the electronic device 100 and a peripheral device, or may be configured to connect to a headset, to play audio by using the headset. The interface may also be configured to be connected to another electronic device, for example, an AR device.

It may be understood that an interface connection relationship, between modules, illustrated in this embodiment of the present invention is merely an example for description, and does not constitute a limitation on a structure of the electronic device 100. In some other embodiments, the electronic device 100 may alternatively use an interface connection manner different from that in the foregoing embodiment, or use a combination of a plurality of interface connection manners.

The charging management module 140 is configured to receive a charging input from the charger. The charger may be a wireless charger or a wired charger. In some embodiments of wired charging, the charging management module 140 may receive a charging input from a wired charger through the USB interface 130. In some embodiments of wireless charging, the charging management module 140 may receive a wireless charging input through a wireless charging coil of the electronic device 100. The charging management module 140 may further supply power to the electronic device by using the power management module 141 while charging the battery 142.

The power management module 141 is configured to connect the battery 142, the charging management module 140, and the processor 110. The power management module 141 receives an input from the battery 142 and/or the charging management module 140, and supplies power to the processor 110, the internal memory 121, an external memory, the display 194, the 3D camera module 193, the wireless communication module 160, and the like. The power management module 141 may be further configured to monitor parameters such as a battery capacity, a quantity of battery cycles, and a battery health status (electric leakage and impedance). In some other embodiments, the power management module 141 may alternatively be disposed in the processor 110. In some other embodiments, the power management module 141 and the charging management module 140 may be alternatively disposed in a same component.

A wireless communication function of the electronic device 100 may be implemented by using the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication bands. Different antennas may be further multiplexed, to improve antenna utilization. For example, the antenna 1 may be multiplexed as a diversity antenna in a wireless local area network. In some other embodiments, an antenna may be used in combination with a tuning switch.

The mobile communication module 150 may provide a solution applied to the electronic device 100 for wireless communication such as 2G/3G/4G/5G. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert, through the antenna 1, an amplified signal into an electromagnetic wave for radiation. In some embodiments, at least some functional modules of the mobile communication module 150 may be disposed in the processor 110. In some embodiments, at least some functional modules of the mobile communication module 150 may be disposed in the same device as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The baseband processor processes the low-frequency baseband signal, and then transfers an obtained signal to the application processor. The application processor outputs a sound signal by using an audio device (which is not limited to the speaker 170A, the receiver 170B, and the like), or displays an image or a video on the display 194. In some embodiments, the modem processor may be an independent component. In some other embodiments, the modem processor may be independent of the processor 110, and is disposed in the same device as the mobile communication module 150 or another functional module.

The wireless communication module 160 may provide a wireless communication solution that is applied to the electronic device 100, and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processor module. The wireless communication module 160 receives an electromagnetic wave through the antenna 2, performs frequency modulation and filtering on an electromagnetic wave signal, and sends a processed signal to the processor 110. The wireless communication module 160 may further receive a to-be-sent signal from the processor 110, perform frequency modulation and amplification on the signal, and convert, through the antenna 2, a frequency-modulated and amplified signal into an electromagnetic wave for radiation. For example, the wireless communication module 160 may include a Bluetooth module, a Wi-Fi module, and the like.

In some embodiments, the antenna 1 and the mobile communication module 150 in the electronic device 100 are coupled, and the antenna 2 and the wireless communication module 160 in the electronic device 100 are coupled, so that the electronic device 100 can communicate with a network and another device by using a wireless communication technology. The wireless communication technology may include global system for mobile communication (global system for mobile communications, GSM), general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, GNSS, WLAN, NFC, FM, IR, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device 100 may implement a display function by using the GPU, the display 194, the application processor, and the like. The GPU is a microprocessor for image processing, and is connected to the display 194 and the application processor. The GPU is configured to perform mathematical and geometric computation for graphics rendering. The processor 110 may include one or more GPUs that execute instructions to generate or change display information.

The display 194 is configured to display an image, a video, or the like. The display 194 includes a display panel. The display panel may use a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like. In some embodiments, the electronic device 100 may include one or N displays 194, where N is a positive integer greater than 1.

The electronic device 100 may implement a camera function by using the 3D camera module 193, the ISP, the video codec, the GPU, the display 194, the application processor AP, the neural-network processing unit NPU, and the like.

The 3D camera module 193 may be configured to collect color image data and depth data of an object. The ISP may be configured to process the color image data collected by the 3D camera module 193. For example, when a shutter is opened for taking a photo, light is transmitted to an image sensor of a camera through a lens, and a light signal is converted into an electrical signal. The image sensor of the camera transmits the electrical signal to the ISP for processing, so that the electrical signal is converted into an image visible to eyes. The ISP may further perform algorithm optimization on noise, luminance, and skin tone of the image. The ISP may further optimize parameters such as exposure and color temperature of a shooting scene. In some embodiments, the ISP may be disposed in the 3D camera module 193.

In some embodiments, the 3D camera module 193 may include a color camera module and a 3D sensing module.

In some embodiments, an image sensor of a camera of the color camera module may be a charge coupled device (charge coupled device, CCD) or a complementary metal-oxide-semiconductor (complementary metal-oxide-semiconductor, CMOS) phototransistor. The image sensor converts an optical signal into an electrical signal, and then transmits the electrical signal to the ISP for converting the electrical signal into a digital image signal. The ISP outputs the digital image signal to the DSP for processing. The DSP converts the digital image signal into an image signal in a standard format such as RGB or YUV.

In some embodiments, the 3D sensing module may be a time of flight (time of flight, TOF) 3D sensing module or a structured light (structured light) 3D sensing module. Structured light 3D sensing is an active depth sensing technology. Basic components of the structured light 3D sensing module may include an infrared (Infrared) transmitter, an IR camera module, and the like. A working principle of the structured light 3D sensing module is to first emit a light spot of a specific pattern (pattern) to a photographed object, and then receive coding of the light spot pattern (light coding) on a surface of the object, to compare the light spot e with an original projected light spot, and calculate three-dimensional coordinates of the object according to a triangulation principle. The three-dimensional coordinates include a distance from the electronic device 100 to the photographed object. TOF 3D sensing is also an active depth sensing technology. Basic components of the TOF 3D sensing module may include an infrared (Infrared) transmitter, an IR camera module, and the like. A working principle of the TOF 3D sensing module is to calculate a distance (that is, a depth) between the TOF 3D sensing module and a photographed object by using an infrared refraction time, to obtain a 3D depth-of-field image.

The structured light 3D sensing module may also be used in fields such as facial recognition, a somatic game console, and industrial machine vision inspection. The TOF 3D sensing module may be further used in fields such as a game console and augmented reality (augmented reality, AR)/virtual reality (virtual reality, VR).

In some other embodiments, the 3D camera module 193 may further include two or more cameras. The two or more cameras may include a color camera. The color camera may be configured to collect color image data of the photographed object. The two or more cameras may collect depth data of the photographed object by using a stereo vision (stereo vision) technology. The stereo vision technology is based on a principle of a parallax of human eyes. Under a natural light source, two or more cameras are used to photograph an image of a same object from different angles, and then an operation such as a triangulation method is performed to obtain distance information, that is, depth information, between the electronic device 100 and the photographed object.

In some embodiments, the electronic device 100 may include one or N 3D camera modules 193, where N is a positive integer greater than 1. Specifically, the electronic device 100 may include one front-facing 3D camera module 193 and one rear-facing 3D camera module 193. The front-facing 3D camera module 193 may be generally configured to collect color image data and depth data of a photographer facing the display 194. The rear-facing 3D camera module may be configured to collect color image data and depth data of an object (such as a character or a scenery) facing the photographer.

In some embodiments, the CPU, the GPU, or the NPU in the processor 110 may process the color image data and the depth data that are collected by the 3D camera module 193. In some embodiments, the NPU may identify, by using a neural network algorithm on which a skeleton joint identification technology is based, for example, a convolutional neural network (CNN) algorithm, color image data collected by the 3D camera module 193 (specifically, the color camera module), to determine skeleton joints of a photographed character. The CPU or the GPU may also run a neural network algorithm to determine the skeleton joints of the photographed character based on the color image data. In some embodiments, the CPU, the GPU, or the NPU may be further configured to: determine a figure (for example, a body proportion and a fatness/thinness degree of a body part between skeleton joints) of the photographed character based on depth data collected by the 3D camera module 193 (specifically, the 3D sensing module) and the identified skeleton joint, further determine a body beautification parameter for the photographed character; and finally process a photographed image of the photographed character based on the body beautification parameter, so that a body shape of the photographed character in the photographed image is beautified. In a subsequent embodiment, how to perform body shaping processing on an image of a photographed character based on color image data and depth data that are collected by the 3D camera module 193 is described in detail. Details are not described herein.

The digital signal processor is configured to process a digital signal, and may process another digital signal in addition to the digital image signal. For example, when the electronic device 100 selects a frequency, the digital signal processor is configured to perform Fourier transform and the like on frequency energy.

The video codec is configured to compress or decompress a digital video. The electronic device 100 can support one or more types of video codecs. Therefore, the electronic device 100 can play or record a video in a plurality of coding formats, for example, moving picture experts group (moving picture experts group, MPEG)-1, MPEG-2, MPEG-3, and MPEG-4.

The NPU is a neural-network (neural-network, NN) computing processor. The NPU quickly processes input information with reference to a structure of a biological neural network, for example, a mode of transmission between human brain neurons, and may further continuously perform self-learning. Applications such as intelligent cognition of the electronic device 100, for example, image recognition, facial recognition, voice recognition, and text understanding may be implemented through the NPU.

The external memory interface 120 may be configured to connect to an external storage card, for example, a micro SD card, to extend a storage capability of the electronic device 100. The external storage card communicates with the processor 110 through the external memory interface 120, to implement a data storage function. For example, data such as music, a picture, and a video is stored into the external storage card.

The internal memory 121 may be configured to store one or more computer programs. The one or more computer programs include instructions. The processor 110 may run the instructions stored in the internal memory 121, so that the electronic device 100 performs a photo preview method for an electronic device provided in some embodiments of this application, and various function applications, data processing, and the like. The internal memory 121 may include a program storage area and a data storage area. The program storage area may store an operating system. The program storage area may further store one or more applications (for example, "gallery" and "contacts") and the like. The data storage area may store data (for example, photos and contacts) created during use of the electronic device 100. In addition, the internal memory 121 may include a high-speed random access memory, and may further include a non-volatile memory, for example, at least one magnetic disk storage device, a flash memory, or a universal flash storage (universal flash storage, UFS).

The electronic device 100 may use the audio module 170, the speaker 170A, the receiver 170B, the microphone 170C, the headset interface 170D, the application processor, and the like to implement an audio function, for example, music playback and sound recording.

The audio module 170 is configured to convert digital audio information into an analog audio signal for output, and convert an analog audio input into a digital audio signal. The audio module 170 may be further configured to encode and decode an audio signal. In some embodiments, the audio module 170 may be disposed in the processor 110, or some functional modules of the audio module 170 may be disposed in the processor 110.

The speaker 170A, also referred to as a "loudspeaker", is configured to convert an audio electrical signal into a sound signal. The electronic device 100 may listen to music or answer a hands-free call through the speaker 170A.

The receiver 170B, also referred to as an "earpiece", is configured to convert an electrical audio signal into a sound signal. A person using the electronic device 100 may answer a call or listen to a voice message by moving the receiver 170B close to his/her ear.

The microphone 170C, also referred to as a "mike" or a "mic", is configured to convert a sound signal into an electrical signal. When making a call or sending a voice message, a user can make a sound with the microphone 170C close to his/her mouth, so as to input a sound signal into the microphone 170C. The electronic device 100 may be provided with at least one microphone 170C. In some other embodiments, the electronic device 100 may be provided with two microphones 170C, to collect a sound signal and further implement a noise reduction function. In some other embodiments, the electronic device 100 may alternatively be provided with three, four, or more microphones 170C, to collect a sound signal, implement noise reduction, identify a sound source, implement a directional recording function, and the like.

The headset interface 170D is configured to connect a wired headset. The headset interface 170D may be the USB interface 130, or may be a 3.5 mm open mobile terminal platform (open mobile terminal platform, OMTP) standard interface or a cellular telecommunications industry association of the USA (cellular telecommunications industry association of the USA, CTIA) standard interface.

The pressure sensor 180A is configured to sense a pressure signal, and can convert the pressure signal into an electrical signal. In some embodiments, the pressure sensor 180A may be disposed on the display 194. There are many types of pressure sensors 180A, for example, a resistive pressure sensor, an inductive pressure sensor, and a capacitive pressure sensor. The capacitive pressure sensor may include at least two parallel plates with conductive materials. When a force is applied to the pressure sensor 180A, capacitance between electrodes changes. The electronic device 100 determines pressure intensity based on a capacitance change. When a touch operation is performed on the display 194, the electronic device 100 detects intensity of the touch operation by using the pressure sensor 180A. The electronic device 100 may further calculate a touch position based on a detection signal of the pressure sensor 180A. In some embodiments, touch operations that are performed at a same touch position but have different touch operation intensity may correspond to different operation instructions. For example, when a touch operation whose touch operation intensity is less than a first pressure threshold is performed on an SMS message application icon, an instruction for viewing an SMS message is executed. When a touch operation whose touch operation intensity is greater than or equal to the first pressure threshold is performed on the SMS message application icon, an instruction for creating a new SMS message is executed.

The gyroscope sensor 180B may be configured to determine a motion gesture of the electronic device 100. In some embodiments, angular velocities of the electronic device 100 around three axes (namely, axes x, y, and z) may be determined by using the gyroscope sensor 180B. The gyroscope sensor 180B may be configured to implement image stabilization during shooting. For example, when the shutter is opened, the gyroscope sensor 180B detects a shaking angle of the electronic device 100, and calculates, based on the angle, a distance for which a lens module needs to compensate, so as to cancel shaking of the electronic device 100 through reverse motion of the lens, thereby implementing image stabilization. The gyroscope sensor 180B may also be used in a navigation scenario and a motion-sensing game scenario.

The barometric pressure sensor 180C is configured to measure a barometric pressure. In some embodiments, the electronic device 100 calculates an altitude based on a value of the barometric pressure measured by the barometric pressure sensor 180C, to assist in positioning and navigation.

The magnetic sensor 180D includes a Hall sensor. The electronic device 100 may detect opening and closing of a flap/leather case by using the magnetic sensor 180D. In some embodiments, when the electronic device 100 is a clamshell phone, the electronic device 100 may detect opening and closing of a flap by using the magnetic sensor 180D. Further, a feature such as automatic unlocking upon uncovering is set based on a detected opening or closing state of a leather case or flap.

The acceleration sensor 180E may detect accelerations of the electronic device 100 in various directions (generally along three axes), may detect a magnitude and a direction of gravity when the electronic device 100 is static, and may be further configured to recognize a posture of the electronic device, thereby being used in applications such as screen switching between a landscape mode and a portrait mode, and a pedometer.

The distance sensor 180F is configured to measure a distance. The electronic device 100 may measure a distance in an infrared manner or a laser manner. In some embodiments, the electronic device 100 may measure a distance in a shooting scene by using the distance sensor 180F, to implement quick focusing.

For example, the optical proximity sensor 180G may include a light-emitting diode (LED) and an optical detector (for example, a photodiode). The light-emitting diode may be an infrared light-emitting diode. The electronic device 100 emits infrared light by using the light-emitting diode. The electronic device 100 detects infrared reflected light from a nearby object by using the photodiode. When sufficient reflected light is detected, the electronic device 100 may determine that there is an object near the electronic device 100. When insufficient reflected light is detected, the electronic device 100 may determine that there is no object near the electronic device 100. The electronic device 100 may detect, by using the optical proximity sensor 180G, that the user holds the electronic device 100 close to an ear for a call, to automatically turn off a screen for power saving. The optical proximity sensor 180G may also be used in a leather case mode or a pocket mode to automatically unlock or lock the screen.

The ambient light sensor 180L is configured to sense ambient light brightness. The electronic device 100 may adaptively adjust brightness of the display 194 based on the sensed ambient light brightness. The ambient light sensor 180L may be further configured to automatically adjust a white balance during photographing. The ambient light sensor 180L may further cooperate with the optical proximity sensor 180G in detecting whether the electronic device 100 is in a pocket, to prevent an accidental touch.

The fingerprint sensor 180H is configured to collect a fingerprint. The electronic device 100 may use a feature of the collected fingerprint to implement fingerprint-based unlocking, application lock access, fingerprint-based photographing, fingerprint-based call answering, and the like.

The temperature sensor 180J is configured to detect a temperature. In some embodiments, the electronic device 100 executes a temperature processing policy based on the temperature detected by the temperature sensor 180J. For example, when the temperature reported by the temperature sensor 180J exceeds a threshold, the electronic device 100 lowers performance of a processor near the temperature sensor 180J, to reduce power consumption and implement thermal protection. In some other embodiments, when the temperature is less than another threshold, the electronic device 100 heats the battery 142 to avoid abnormal shutdown of the electronic device 100 caused by a low temperature. In some other embodiments, when the temperature is less than still another threshold, the electronic device 100 boosts an output voltage of the battery 142 to avoid abnormal shutdown caused by a low temperature.

The touch sensor 180K may also be referred to as a touch panel or a touch-sensitive surface. The touch sensor 180K may be disposed on the display 194. The touch sensor 180K and the display 194 constitute a touchscreen, which is also referred to as a "touch screen". The touch sensor 180K is configured to detect a touch operation performed on or near the touch sensor. The touch sensor may transfer the detected touch operation to the application processor to determine a type of a touch event. A visual output related to the touch operation may be provided through the display 194. In some other embodiments, the touch sensor 180K may alternatively be disposed on a surface of the electronic device 100 at a position different from that of the display 194.

The bone conduction sensor 180M may obtain a vibration signal. In some embodiments, the bone conduction sensor 180M may obtain a vibration signal of a vibration bone of a human vocal-cord part. The bone conduction sensor 180M may also be in contact with a human pulse, to receive a blood pressure beating signal. In some embodiments, the bone conduction sensor 180M may alternatively be disposed in the headset, to constitute a bone conduction headset. The audio module 170 may obtain a voice signal by parsing the vibration signal that is of the vibration bone of the vocal-cord part and that is obtained by the bone conduction sensor 180M, to implement a voice function. The application processor may parse heart rate information based on the blood pressure beating signal obtained by the bone conduction sensor 180M, to implement a heart rate detection function.

The key 190 includes a start key, a volume key, and the like. The key 190 may be a mechanical key or a touch key. The electronic device 100 may receive a key input, and generate a key signal input related to user settings and function control of the electronic device 100.

The motor 191 may generate a vibration prompt. The motor 191 may be configured to produce an incoming call vibration prompt and a touch vibration feedback. For example, touch operations performed on different applications (for example, photographing and audio playing) may correspond to different vibration feedback effects. For touch operations performed on different areas of the display 194, the motor 191 may further produce different vibration feedback effects correspondingly. Different application scenarios (for example, time reminding, information receiving, an alarm clock, and a game) may also correspond to different vibration feedback effects. A touch vibration feedback effect may be further customized.

The indicator 192 may be an indicator light, and may be configured to indicate a charging status and a power change, or may be configured to indicate a message, a missed call, a notification, and the like.

The SIM card interface 195 is configured to connect a SIM card. The SIM card may be inserted into the SIM card interface 195 or withdrawn from the SIM card interface 195, thereby getting in contact with or being separated from the electronic device 100. The electronic device 100 may support one or N SIM card interfaces, where N is a positive integer greater than 1. The SIM card interface 195 may support a nano SIM card, a micro SIM card, a SIM card, or the like. A plurality of cards may be inserted into a same SIM card interface 195 at the same time. The plurality of cards may be of a same type or of different types. The SIM card interface 195 is compatible with different types of SIM cards. The SIM card interface 195 is also compatible with an external storage card. The electronic device 100 interacts with a network via a SIM card, thereby implementing functions such as making/answering a call and data communication. In some embodiments, the electronic device 100 uses an eSIM, namely, an embedded SIM card. The eSIM card may be embedded in the electronic device 100, and cannot be separated from the electronic device 100.

The electronic device 100 illustrated in FIG. 1A may display, by using the display 194, user interfaces described in the following embodiments. The electronic device 100 may detect a touch control operation in each user interface by using the touch sensor 180K, for example, a tap operation (for example, a touch operation or a double-tap operation on an icon) in each user interface, for another example, an upward or downward slide operation in each user interface, or an operation of drawing a circle gesture. In some embodiments, the electronic device 100 may detect, by using the gyroscope sensor 180B, the acceleration sensor 180E, or the like, a motion gesture that is executed by a user holding the electronic device 100, for example, shaking the electronic device. In some embodiments, the electronic device 100 may detect a non-touch gesture operation by using the 3D camera module 193 (for example, a 3D camera or a depth camera).

A software system of the electronic device 100 may use a layered architecture, an event-driven architecture, a microkernel architecture, a micro service architecture, or a cloud architecture. In this embodiment of the present invention, an Android system of a layered architecture is used as an example to illustrate the software structure of the electronic device 100.

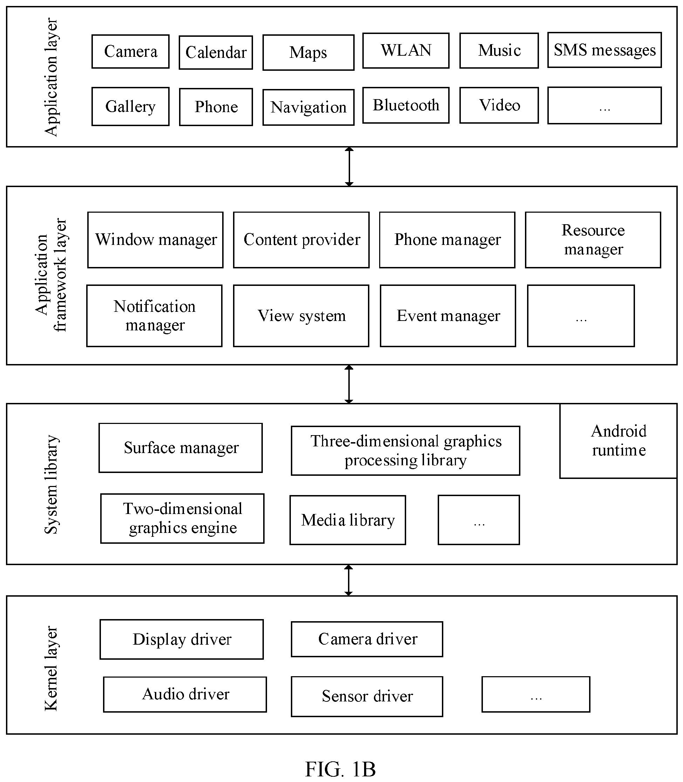

FIG. 1B is a block diagram of a software structure of an electronic device 100 according to an embodiment of the present invention.

In a layered architecture, software is divided into several layers, and each layer has a clear role and responsibility. The layers communicate with each other through a software interface. In some embodiments, the Android system is divided into four layers: an application layer, an application framework layer, an Android runtime (Android runtime) and system library, and a kernel layer from top to bottom.

The application layer may include a series of application packages.

As shown in FIG. 1B, the application packages may include applications such as camera, gallery, calendar, phone, maps, navigation, WLAN, Bluetooth, music, video, and SMS messages.

The application framework layer provides an application programming interface (application programming interface, API) and a programming framework for an application at the application layer. The application framework layer includes some predefined functions.

As shown in FIG. 1B, the application framework layer may include a window manager, a content provider, a view system, a phone manager, a resource manager, a notification manager, and the like.

The window manager is configured to manage a window program. The window manager may obtain a size of the display, determine whether there is a status bar, lock a screen, take a screenshot, and the like.

The content provider is configured to store and obtain data, and make the data accessible to an application. The data may include a video, an image, audio, made and received calls, browse history and favorites, a phone book, and the like.

The view system includes visual controls, such as a control for displaying a text and a control for displaying an image. The view system may be configured to construct an application. A display interface may include one or more views. For example, a display interface including an SMS notification icon may include a text display view and a picture display view.

The phone manager is configured to provide a communication function of the electronic device 100, for example, management of call statuses (including answering, declining, and the like).

The resource manager provides, for an application, various resources such as a localized character string, an icon, a picture, a layout file, and a video file.

The notification manager enables an application to display notification information in a status bar, and may be configured to convey a notification-type message. The displayed information may automatically disappear after a short stay, without user interaction. For example. the notification manager is configured to notify a user that downloading is completed, provide a message notification, and the like. The notification manager may alternatively provide a notification, such as a notification of an application running in the background, appearing in a top status bar of the system in a form of a chart or scrollbar text, or may provide a notification appearing in a form of a dialog window on the screen. For example, text information is displayed in the status bar, a prompt sound is played, the electronic device vibrates, or an indicator light blinks.

The Android runtime includes a kernel library and a virtual machine. The Android runtime is responsible for scheduling and managing the Android system.

The kernel library includes two parts: a functional function that needs to be invoked in the Java language, and a kernel library of Android.

The application layer and the application framework layer run in a virtual machine. The virtual machine executes Java files at the application layer and the application framework layer as binary files. The virtual machine is configured to perform functions such as object lifecycle management, stack management, thread management, security and exception management, and garbage collection.

The system library may include a plurality of functional modules, for example, a surface manager (surface manager), a media library (media library), a three-dimensional graphics processing library (for example, OpenGL ES), and a 2D graphics engine (for example, SGL).

The surface manager is configured to manage a display subsystem, and provides fusion of 2D and 3D layers for a plurality of applications.

The media library supports playback and recording in a plurality of common audio and video formats, a static image file, and the like. The media library may support a plurality of audio and video coding formats, for example, MPEG4, G.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

The software system shown in FIG. 1B involves application presentation (such as a gallery and a file manager) that uses a sharing capability, an instant sharing module that provides the sharing capability, a print service (print service) and a print spooler (print spooler) that provide a printing capability, an application framework layer that provides a printing framework, a WLAN service, and a Bluetooth service, and a kernel and a bottom layer that provide a WLAN capability, a Bluetooth capability, and a basic communication protocol.

For ease of understanding by a person skilled in the art, the following describes some terms in this application.
(1) Wi-Fi direct (Wi-Fi peer-to-peer, WiFi-P2P): enables devices to easily connect to each other without requiring an intermediary wireless access point (Access Point, AP). An application range of WiFi-P2P includes web browsing, file transmission, and simultaneous communication with a plurality of devices, in which full play can be given to the speed advantage of Wi-Fi. WiFi-P2P and a conventional Wi-Fi technology are not mutually exclusive. A GO (Group Owner) can provide services for a plurality of GCs (Group Clients) like an AP, may connect to an AP like a conventional device, and may alternatively be an AP. The GO is a role in a protocol, and is equivalent to an AP. One group has only one GO. The GC is another role in the protocol. One group may have a plurality of GCs.
(2) Wireless local area network (Wireless Local Area Network, WLAN): uses a wireless communication technology to interconnect computer devices into a network system that can implement mutual communication and resource sharing. An essential feature of a wireless local area network is that computers are connected to a network in wireless mode instead of using communication cables. Therefore, network construction and terminal movement are more flexible.
(3) Near field communication (Near Field Communication, NFC): an emerging technology. Devices using the NFC technology can exchange data when being close to each other. NFC is integrated and evolved from the non-contact radio frequency identification (RFID) technology and the Interconnection and Interworking technology, and implements application such as mobile payment, electronic ticketing, access control, mobile identity identification, and anti-counterfeiting by integrating functions of an inductive card reader, an inductive card, and point-to-point communication into a single chip and using a mobile terminal.
(4) Ad hoc network: a network that combines mobile communication with a computer network. Information exchange in the network uses a packet switching mechanism in the computer network. A user terminal is a portable terminal that can be moved. Each user terminal in an ad hoc network has functions of both a router and a host.

To facilitate understanding of embodiments of the present invention, the following lists, as an example, scenarios of a file transmission system to which a file transmission method in this application is applied. It may be understood that when a file transmission method in this application is applied to different scenarios, an intelligent terminal device may correspond to different types of devices, respectively. In addition, different types of files are transmitted correspondingly. The following lists two scenarios as examples.

### Scenario 1: File transmission based on video production

With the rapid development of the Internet. more and more young people like shooting Vlogs to record little things in their lives and upload the Vlogs to the Internet for sharing with their friends and fans. This drives continuous progress of camera functions of mobile phones. People gradually replace heavy cameras with mobile phones, to record a video material anytime and anywhere. To complete a Vlog video, a person needs to write a manuscript and shoot the video material at an early stage, and perform editing at a late stage, to ensure that the Vlog video is a continuous video with complete content. It is inevitable that the following situation is encountered in a Vlog video producing process: To make a captured frame clearer, a photographer usually uses a rear camera of a mobile phone for shooting. When recording some frames in which the photographer needs to appear, a tablet may be used to establish a collaboration with the mobile phone and used as a video image monitoring screen, so that the photographer can view a shooting effect at any time. However, when the photographer wants to upload the video material to a computer for editing, the mobile phone needs to interrupt the collaboration with the tablet, and then establish a collaboration with the computer to upload a file. Such a complex operation brings some inconvenience to the photographer. Therefore, in this scenario, according to this embodiment of the present invention, a collaboration can be established between the mobile phone and the tablet, and a display of the mobile phone can be projected to the tablet. After the tablet establishes a collaboration with the computer, the computer can send the manuscript to the tablet at any time. In this case, the photographer can complete video recording by watching only the tablet. In addition, the video material in the mobile phone can be directly dragged and transmitted to the computer without establishing a collaboration between the mobile phone and the computer. Then, post-editing can be performed by using the computer. This greatly facilitates a process of producing a Vlog video by a photographer.

### Scenario 2: File transmission based on an enterprise conference

With the advancement of science and technology, more and more enterprises begin to focus on high office efficiency. In a conventional enterprise conference, a presenter needs to prepare a file in advance, print the file, and distribute the file to each participant. In addition, if someone modifies the file during the conference, the modification cannot be quickly synchronized to other participants. In this case, if personal electronic devices of the participants are connected to each other, the conference presenter can directly transmit the file prepared by the presenter to the personal electronic devices of other participants; and if a participant modifies the file, the participant can send a modified file to the personal electronic devices of other participants. According to this embodiment of the present invention, file transmission can be implemented among a plurality of electronic devices (three or more electronic devices) without interrupting collaborations of the electronic devices, thereby improving office efficiency in an enterprise conference.

It may be understood that the foregoing two application scenarios are merely example implementations in embodiments of the present invention, and application scenarios in embodiments of the present invention include but are not limited to the foregoing application scenarios.

The following describes embodiments of this application with reference to the accompanying drawings.

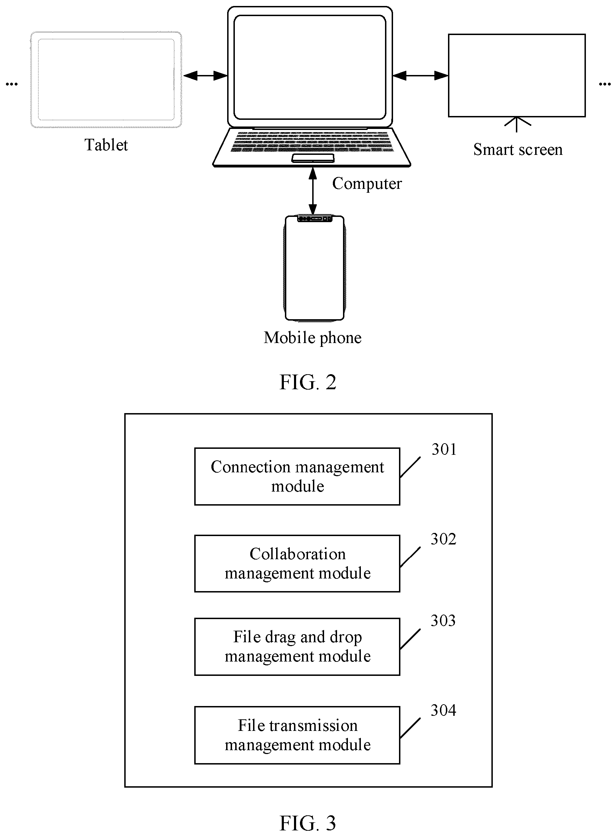

Based on the foregoing technical problem and a corresponding application scenario in this application, to facilitate understanding of embodiments of the present invention, the following first describes a system architecture on which embodiments of the present invention are based. FIG. 2 is a schematic diagram of a file transmission system architecture according to an embodiment of the present invention. The system architecture is used to resolve a problem that efficiency of file resource transmission among a plurality of intelligent terminal devices is low. An architecture of the system may include N devices. Any device in the N devices establishes a collaboration with at least one another device in the N devices. N is an integer greater than 2. Any device in the N devices may be the electronic device 100 in FIG. 1A.

A first device, where the first device is any device in the N devices. In this application, the first device is an electronic device that initiates a file drag operation. The electronic device has an operating system and a data transmission interface. Common electronic devices include devices such as a smartphone, a personal computer, a tablet, and a smart screen. For example, the first device is a smartphone. The smartphone has an independent operating system, and can implement wireless network access by using a mobile communication network. The smartphone can store some files and edit the files. After establishing a collaboration with another electronic device, the smartphone can transmit the files to the another electronic device.

A third device, where the third device is any device in the N devices (for example, one of the M second devices). In this application, the third device is an electronic device that receives a target file. The electronic device has an operating system and a data transmission interface. Common electronic devices include devices such as a smartphone, a personal computer, a tablet, and a smart screen. For example, the third device is a personal computer. The personal computer has an independent operating system, and can access the Internet in a wired or wireless manner. In addition, the personal computer can establish a collaboration with another electronic device and can receive or forward a file from the another electronic device. For another example, the third device is a tablet. The tablet can communicate with another electronic device, and can establish collaborations with some electronic devices. In addition, a projection function of a smartphone can also be implemented on the tablet, so that a desktop of the smartphone can be displayed on a display of the tablet. In addition, the tablet can receive or forward a file from the another electronic device.

It may be understood that the file transmission system architecture in FIG. 2 is merely an example implementation in the embodiments of this application, and the file transmission system architecture in the embodiments of this application includes but is not limited to the foregoing system architecture.

The following describes a file transmission system architecture of any device in the N devices in embodiments of the present invention. FIG. 3 is a schematic diagram of a file transmission system architecture of any device in N devices according to an embodiment of the present invention. The file transmission system architecture includes a connection management module 301, a collaboration management module 302, a file drag and drop management module 303, and a file transmission management module 304.

The connection management module 301 is responsible for establishing a connection among a plurality of electronic devices. For example, the connection management module 301 can provide a connection entry for a user, to facilitate access of a plurality of electronic devices during collaboration. In addition, the connection management module 301 can provide an authentication function in a connection process, and can establish a connection between electronic devices after completing authentication for an accessing electronic device. The connection management module 301 provides a disconnection entry when electronic devices need to be disconnected from each other, so that an electronic device that establishes a connection can interrupt the connection at any time.

The collaboration management module 302 is responsible for implementing a collaboration function between electronic devices. For example, if a collaboration is established among a plurality of electronic devices, the collaboration management module 302 can provide a capability of supporting audio and video transmission such as screen projection and audio switching between electronic devices. The collaboration management module 302 can further provide a capability of supporting data transmission such as sending and receiving of various kinds of operation signaling between devices. In addition, a capability of supporting sharing with a peripheral can be further provided. The peripheral is used on an electronic device that does not support touch control, so that the electronic device can use a file drag function conveniently.

The file drag and drop management module 303 is responsible for implementing file sharing between electronic devices. For example, in the file drag and drop management module 303, file type information can be obtained. For example, file name suffixes of different files are obtained to determine file types, so that drag effects that are more suitable for different operating systems can be generated in different systems. On an electronic device that triggers file dragging, a decision can be generated on a drag effect according to a type, a quantity, a size, and an arrangement sequence of a dragged file, to determine that corresponding drag effects are displayed on different devices. The drag effect is a display effect of a file in a drag process. Then, in the file drag and drop management module 303, a file drag effect can be managed, and operations such as forwarding and releasing can be determined according to a device at which a release position is located. The file drag and drop management module 303 can implement management of a related function of file dragging between electronic devices.

The file transmission management module 304 is responsible for obtaining and generating a file drag event. For example, in the file transmission management module 304, file information of a dragged file can be obtained, and file transmission and receiving can be prepared accordingly. In addition, file storage can be managed in this module. The file storage is correspondingly managed by determining whether a current electronic device can receive a file and determining a storage path by which the file is to be received. File sending and receiving can also be managed in this module. A socket (Socket) connection can be created according to IPs of different electronic devices, so that a channel can be established between different devices for inter-device file transmission. The file transmission management module 304 can implement related inter-device operations such as file transmission, receiving, and storage.

It may be understood that the file transmission system architecture in the electronic device in FIG. 3 is merely an example implementation in embodiments of the present invention, and the file transmission system architecture in the electronic device in embodiments of the present invention includes but is not limited to the foregoing structure.

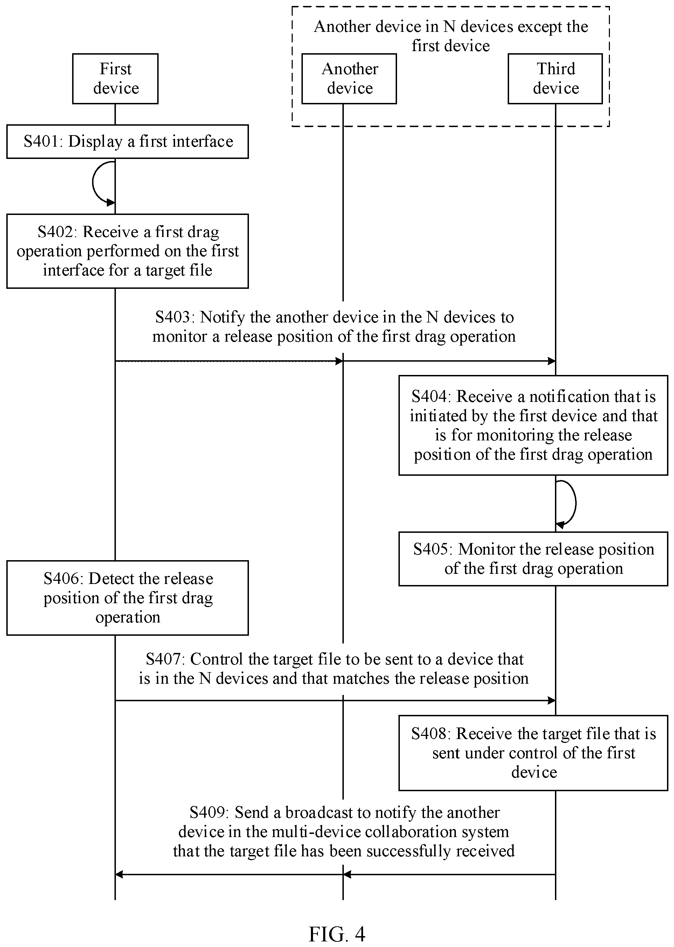

The following describes a specific method architecture on which embodiments of the present invention are based. FIG. 4 is a schematic flowchart of a file transmission method according to an embodiment of this application. The following describes a file scanning method in this embodiment of this application from interactive sides of a first device and a third device (for example, one of M second devices) with reference to FIG. 4 and based on the file transmission system architecture in FIG. 2. It should be noted that, to describe the file transmission method in embodiments of this application in more detail, this application describes, in each process step, that a corresponding execution body is the first device or the third device. However, this does not mean that in embodiments of this application, a corresponding method process can be performed only by using the described execution body.

Step S401: The first device displays a first interface.

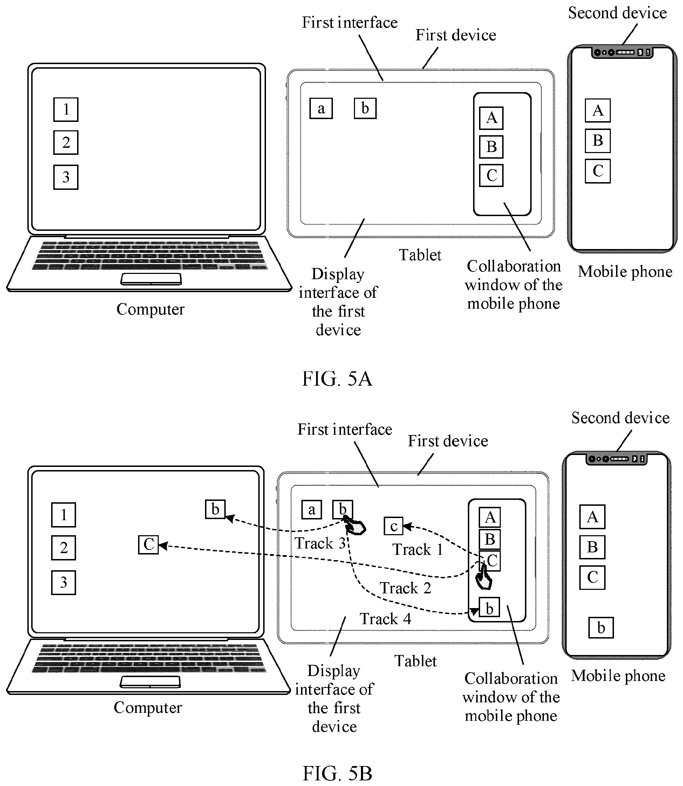

Specifically, the first interface includes a display interface of the first device and a collaboration window corresponding to M second devices that establish a collaboration with the first device; and M is an integer greater than or equal to 0. The first device may display the first interface by using the display 194. For example, as shown in FIG. 5A that is a schematic diagram of a multi-device collaboration system (for example, a collaboration system having three devices), the system includes three electronic devices. The three electronic devices are a computer, a tablet, and a mobile phone, respectively. The first device may be the tablet in the following scenario: The computer establishes a collaboration with the tablet, the tablet establishes a collaboration with the mobile phone, and the tablet has a collaboration window corresponding to the mobile phone, but the computer does not establish a collaboration with the mobile phone. In this case, a value of M is 1, and the M second devices include one mobile phone. Therefore, the first interface is a screen of the tablet, the screen of the tablet has only one collaboration window corresponding to a device, and positions, other than a position of the collaboration window, on the screen of the tablet are the display interface of the first device.

Step S402: The first device receives a first drag operation performed on the first interface for a target file.

Specifically, the target file is a to-be-shared file; and the first drag operation may include but is not limited to dragging the target file by touching the screen with the touch sensor 180K of the first device and dragging the target file by using a peripheral such as a mouse. For example, as shown in FIG. 5B that is a schematic diagram of initiating dragging of a file on a first device in a multi-device collaboration system (for example, a collaboration system having three devices), the system includes three electronic devices. The three electronic devices are a computer, a tablet, and a mobile phone, respectively. The tablet may be used as the first device in the following scenario: The computer establishes a collaboration with the tablet, the tablet establishes a collaboration with the mobile phone, and the tablet has a collaboration window corresponding to the mobile phone, but the computer does not establish a collaboration with the mobile phone. A drag operation for the target file is initiated on a screen of the tablet. The target file may be any file in the screen. As shown in the figure, the target file may be a file C or a file b. A user may select the target file on the screen, perform a drag operation for the target file, and then drag the file C according to a track 1 or a track 2, or drag the file b according to a track 3 or a track 4. It should be noted that the tracks are not limited to the tracks mentioned above, and may further include more possibilities. The tablet may receive the drag operation after the user initiates the drag operation for the target file.

Step S403: The first device notifies another device in the N devices to monitor a release position of the first drag operation.

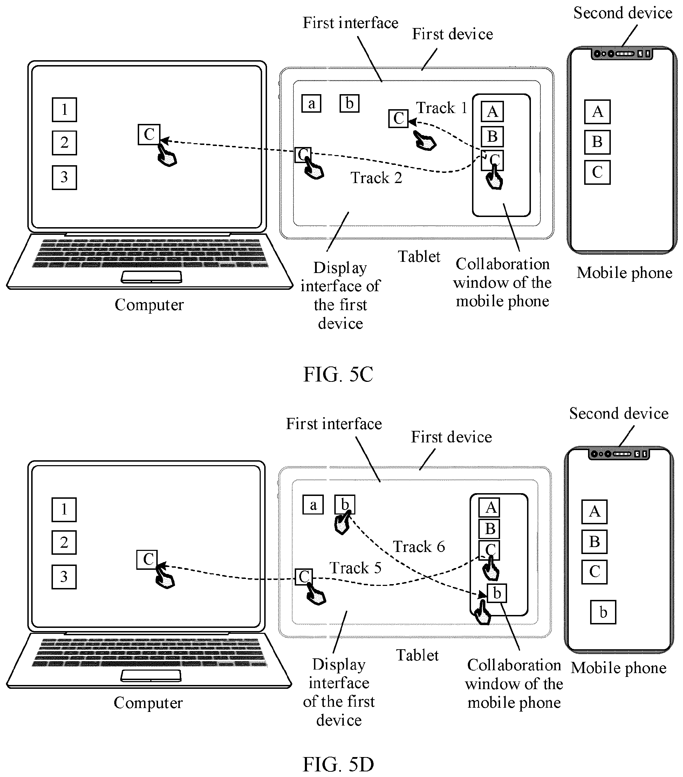

Specifically, the release position includes an interface of any device in the N devices or the collaboration window; and the release position of the first drag operation is a position at which the user releases the target file on the first interface. For example, as shown in FIG. 5C that is a schematic diagram of a release position of a first drag operation in a multi-device collaboration system (for example, a collaboration system having three devices), a user initiates a drag operation for a file C in a mobile phone collaboration window on the first interface. In this case, the tablet sends a broadcast message to notify the computer, the tablet, and the mobile phone in the multi-device collaboration system that the file drag operation is initiated, so that each device in the system gets ready to receive the file C. In this case, each device monitors the release position of the file drag operation; and each device can learn that the file C comes from the mobile phone.

Step S404: The third device receives a notification that is initiated by the first device and that is for monitoring the release position of the first drag operation.

Specifically, the third device is a device corresponding to the release position of the first drag operation. For example, as shown in FIG. 5C that is a schematic diagram of a release position of a first drag operation in a multi-device collaboration system (for example, a collaboration system having three devices), a user initiates a drag operation for a file C in a mobile phone collaboration window on the first interface. The third device may be the computer or the tablet. In this case, both the computer and the tablet receive the notification that is initiated by the first device and that is for monitoring the release position of the first drag operation, thereby learning that the file C on the mobile phone is to be shared, and getting ready to receive the file C at any time.

Step S405: The third device monitors the release position of the first drag operation.

Specifically, after learning that the target file on the first device is to be shared, the third device consistently monitors whether the release position of the first drag operation corresponds to an interface of the third device. For example, as shown in FIG. 5C that is a schematic diagram of a release position of a first drag operation in a multi-device collaboration system (for example, a collaboration system having three devices), a user initiates a drag operation for a file C in a mobile phone collaboration window on the first interface. The third device may be the computer or the tablet. When the computer is used as the third device, the computer consistently monitors a position at which the file C is released, and receives the file C when the file C is released on a display interface of the computer.

Step S406: The first device detects the release position of the first drag operation.

Specifically, the release position on the first interface may include a display interface of any device in the N devices or a collaboration window corresponding to the device. In this case, the third device is a device corresponding to the release position of the first drag operation. For example, as shown in FIG. 5C that is a schematic diagram of a release position of a first drag operation in a system that has three devices, a user initiates a drag operation for a file C in a mobile phone collaboration window on the first interface. If the file C is released on a display interface of the tablet after being dragged along a track 1, the tablet detects that the release position is the display interface of the tablet. In this case, the third device is the tablet, indicating that the file C needs to be sent to the tablet. Alternatively, if the file C is released on a display interface of the computer after being dragged along a track 2, the tablet detects that the release position is the display interface of the computer. In this case, the third device is the computer, indicating that the file C needs to be sent to the computer.

Step S407: The first device controls the target file to be sent to a device in the N devices that matches the release position.

Specifically, the controlling the target file to be sent to a device in the N devices that matches the release position includes: sending, by the first device, the target file to the device matching the release position; or controlling, by the first device, another device to send the target file to the device matching the release position. For example, as shown in FIG. 5D that is a schematic diagram of sending a target file in a multi-device collaboration system (for example, a collaboration system having three devices), if a user selects a file C on the first interface, drags the file C along a track 5, and releases the drag operation on a display interface of the computer, the tablet controls the mobile phone to send the file C to the computer. If the user selects a file b on the first interface, drags the file b along a track 6, and releases the drag operation in a collaboration window corresponding to the mobile phone, the tablet sends the file b to the mobile phone.

Step S408: The third device receives the target file that is sent under control of the first device.

Specifically, after the first device controls the target file to be sent to the third device, the third device may store the target file. For example, as shown in FIG. 5D that is a schematic diagram of sending a target file in a multi-device collaboration system (for example, a collaboration system having three devices), if a user selects a file C on the first interface, drags the file C along a track 5, and releases the drag operation on a display interface of the computer, the tablet controls the mobile phone to send the file C to the computer. In this case, the computer is used as the third device, to receive the file C and store the file C locally. If the user selects a file b on the first interface, drags the file b along a track 6, and releases the drag operation in a collaboration window corresponding to the mobile phone, the tablet sends the file b to the mobile phone. In this case, the mobile phone is used as the third device, to receive the file b and store the file b locally.

Step S409: The third device sends a broadcast to notify another device in the multi-device collaboration system that the target file has been successfully received.

Specifically, after successfully receiving the target file, the third device sends the broadcast to notify the another device in the multi-device collaboration system that the target file has been successfully received and that the another device does not need to wait for receiving any more. For example, as shown in FIG. 5D that is a schematic diagram of sending a target file in a multi-device collaboration system (for example, a collaboration system having three devices), if a user selects a file C on the first interface, drags the file C along a track 5, and releases the drag operation on a display interface of the computer, the tablet controls the mobile phone to send the file C to the computer. After successfully receiving the file C, the computer notifies the tablet and the mobile phone in the multi-device collaboration system that the file C has been successfully received and that a wait for receiving is not required any more.

By using the method in this embodiment of the present invention, each device in the multi-device collaboration system can send or receive the target file without interrupting a collaboration, which avoids the following phenomenon: When file transmission is performed between two devices that do not establish a collaboration with each other, the file transmission is implemented by interrupting collaborations that have been established between the two devices and another device, and establishing a new collaboration. Therefore, convenient and quick file transmission among a plurality of devices is implemented, which not only improves file resource transmission efficiency in multi-device collaboration, but also simplifies user operations. This improves user experience.

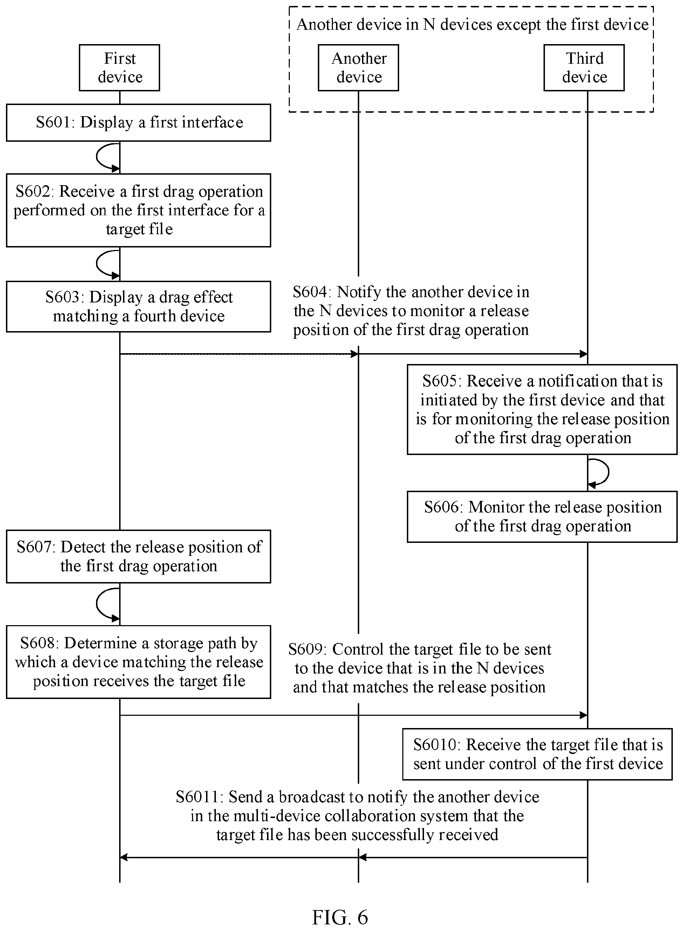

The following describes a specific method architecture on which embodiments of the present invention are based. FIG. 6 is a detailed schematic flowchart of a file transmission method according to an embodiment of this application. The following describes a file transmission method in this embodiment of this application from interactive sides of a first device and a third device (for example, one of M second devices) with reference to FIG. 6 and based on the file transmission system architecture in FIG. 2. It should be noted that, to describe the file scanning method in embodiments of this application in more detail, this application describes, in each process step, that a corresponding execution body is the first device or the third device. However, this does not mean that in embodiments of this application, a corresponding method process can be performed only by using the described execution body.

Step S601: The first device displays a first interface.

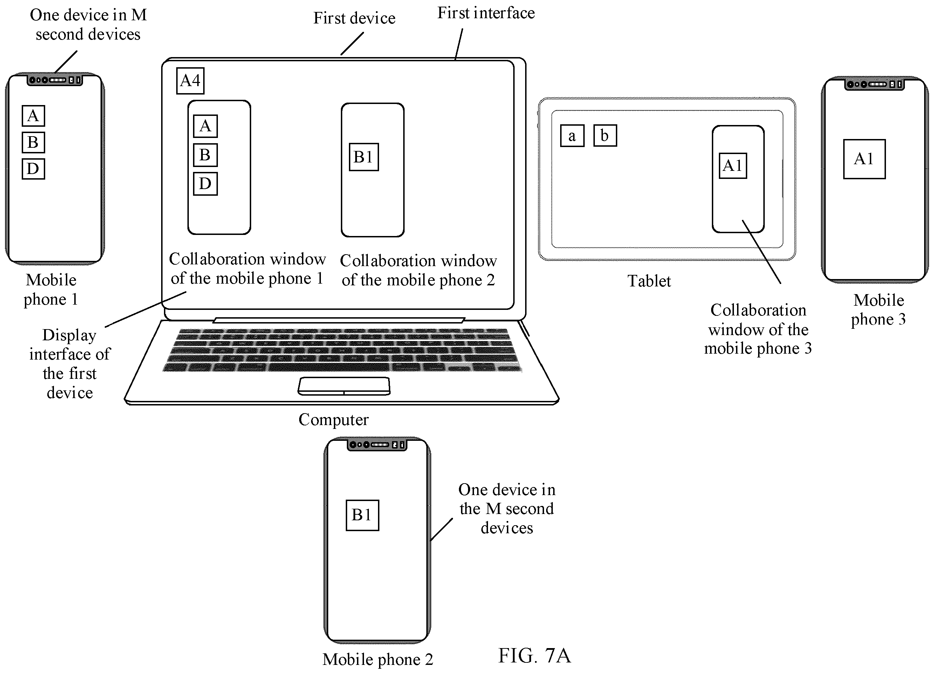

Specifically, the first interface includes a display interface of the first device and a collaboration window corresponding to M second devices that establish a collaboration with the first device; and M is an integer greater than or equal to 0. The first device may display the first interface by using the display 194. For example, as shown in FIG. 7A that is a schematic diagram of a multi-device collaboration system (for example, a collaboration system having five devices), the system includes five electronic devices. The five electronic devices are a computer, a tablet, a mobile phone 1, a mobile phone 2, and a mobile phone 3, respectively. The computer may be used as the first device in the following scenario: The mobile phone 1 establishes a collaboration with the computer, the computer has a collaboration window corresponding to the mobile phone 1, the mobile phone 2 establishes a collaboration with the computer, the computer has a collaboration window corresponding to the mobile phone 2, the computer establishes a collaboration with the tablet, the mobile phone 3 establishes a collaboration with the tablet, and the tablet has a collaboration window corresponding to the mobile phone 3. The computer may display the first interface. In this case, a value of M is 2; the M second devices include the mobile phone 1 and the mobile phone 2; a screen of the computer has collaboration windows corresponding to the two devices; and positions, other than positions of the collaboration windows, on the screen of the computer are the display interface of the first device.

Step S602: The first device receives a first drag operation performed on the first interface for a target file.

Specifically, the target file is a to-be-transmitted file; and the first drag operation may include but is not limited to dragging the target file by touching the screen with the touch sensor 180K of the first device and dragging the target file by using a peripheral such as a mouse. FIG. 7A is a schematic diagram of a multi-device collaboration system (for example, a collaboration system having five devices). In the figure, the system includes five electronic devices. The five electronic devices are a computer, a tablet, a mobile phone 1, a mobile phone 2, and a mobile phone 3, respectively. It should be noted that the computer may be used as the first device in the following scenario: The mobile phone 1 establishes a collaboration with the computer, the computer has a collaboration window corresponding to the mobile phone 1, the mobile phone 2 establishes a collaboration with the computer, the computer has a collaboration window corresponding to the mobile phone 2, the computer establishes a collaboration with the tablet, the mobile phone 3 establishes a collaboration with the tablet, and the tablet has a collaboration window corresponding to the mobile phone 3. In this case, the target file may be a file A, a file B, a file D, a file A4, or a file B4.

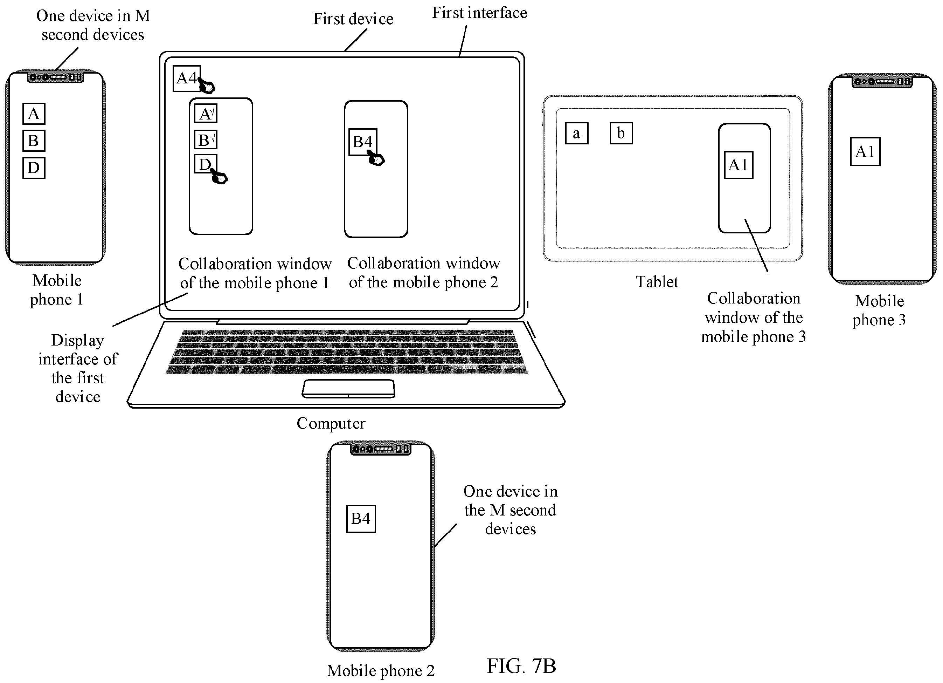

In a possible implementation, the target file is a file stored in the first device, and a start position of the first drag operation is on the display interface. Alternatively, the target file is a file stored in a start second device in the M second devices, and a start position of the first drag operation is in a collaboration window corresponding to the start second device. Specifically, the first interface includes the display interface of the first device and the collaboration window corresponding to the M second devices; and the drag operation is performed on the first interface for the target file. If the target file is on the display interface of the first device, and the target file is dragged on the display interface of the first device instead of being dragged on the collaboration window corresponding to the M second devices, it is indicated that the target file is stored in the first device, and it is determined that the first device can send the target file. If the target file is on the collaboration window corresponding to one of the devices, and the target file is dragged on the collaboration window instead of being dragged on the display interface of the first device, it is indicated that the target file is stored in the device corresponding to the collaboration window, and it is determined that the first device can control the device corresponding to the collaboration window to send the target file. For example, as shown in FIG. 7B that is a schematic diagram of a target file in a multi-device collaboration system (for example, a collaboration system having five devices), the system includes five electronic devices. The five electronic devices are a computer, a tablet, a mobile phone 1, a mobile phone 2, and a mobile phone 3, respectively. The computer may be used as the first device in the following scenario: The mobile phone 1 establishes a collaboration with the computer, the computer has a collaboration window corresponding to the mobile phone 1, the mobile phone 2 establishes a collaboration with the computer, the computer has a collaboration window corresponding to the mobile phone 2, the computer establishes a collaboration with the tablet, the mobile phone 3 establishes a collaboration with the tablet, and the tablet has a collaboration window corresponding to the mobile phone 3. In the figure, when a user needs to perform a file drag operation for the file A4, because the file A4 is on a display interface of the computer, it may be considered that the file A4 is stored in the computer, and the computer may receive the drag operation performed on the display interface of the computer for the file A4. In the figure, when the user needs to perform a file drag operation for the file A, the file B, and the file D, it should be noted that in this case, the start second device is the mobile phone 1. Because the file A, the file B, and the file D are in a collaboration window on a screen of the computer, it may be considered that the file A, the file B, and the file D are stored in the mobile phone 1 corresponding to the collaboration window, and the computer may receive the drag operation performed on the collaboration window on the screen of the computer for the file A, the file B, and the file D.

Step S603: The first device displays a drag effect matching a fourth device.

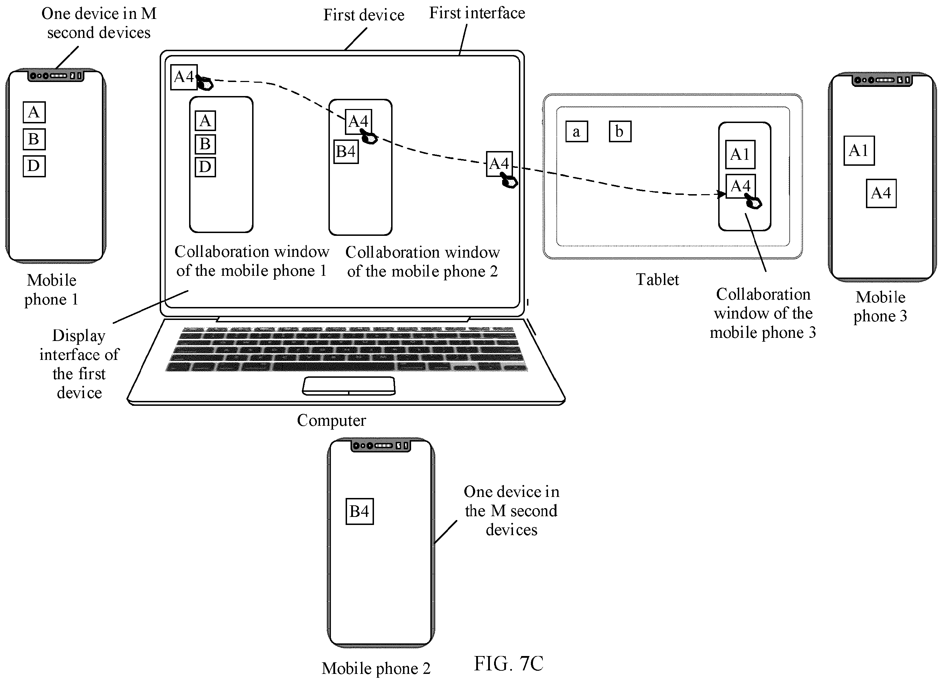

Specifically, the fourth device is a device through which the target file passes in a dragging and moving process. For example, the fourth device may be any device in the M second devices. In a possible implementation, the method further includes: obtaining first information of the target file, where the first information includes one or more of file type information, file quantity information, and file arrangement sequence information of the target file; generating a drag effect set of the target file based on the first information; and displaying, based on the drag effect set of the target file, the drag effect matching the fourth device, where the fourth device is a device through which a drag track of the first drag operation passes, or a device corresponding to a collaboration window on the device through which the drag track of the first drag operation passes. Specifically, when the user selects the target file and performs the drag operation for the target file, the target file moves along the drag track. In this process, a corresponding drag effect is displayed when the drag operation is operation for the target file, to display in real time positions from/to which the target file is moved. It should be noted that, when the target file is dragged, the first device may control a device that stores the target file, to obtain one or more of the file type information, the file quantity information, and the file arrangement sequence information of the target file; generate the drag effect set of the target file according to the information; and display a corresponding drag effect according to an operating system of the device through which the drag track passes. For example, as shown in FIG. 7C that is a schematic diagram of a drag effect in a multi-device collaboration system (for example, a collaboration system having five devices), the system includes five electronic devices. The five electronic devices are a computer, a tablet, a mobile phone 1, a mobile phone 2, and a mobile phone 3, respectively. The computer may be used as the first device in the following scenario: The mobile phone 1 establishes a collaboration with the computer, the computer has a collaboration window corresponding to the mobile phone 1, the mobile phone 2 establishes a collaboration with the computer, the computer has a collaboration window corresponding to the mobile phone 2, the computer establishes a collaboration with the tablet, the mobile phone 3 establishes a collaboration with the tablet, and the tablet has a collaboration window corresponding to the mobile phone 3. In the figure, the user selects the file A4 on a display interface of the computer, and moves the file A4 along a drag track. The track may pass through a collaboration window corresponding to the mobile phone 2. In this case, the mobile phone 2 may be used as the fourth device. To display in real time positions from/to the file A4 is moved, a drag effect corresponding to an operating system of a device is displayed according to the operating system of the device in a moving process. As shown in FIG. 7C, the drag effect may be a file shadow effect generated according to the file A4.

Step S604: The first device notifies another device in the N devices to monitor a release position of the first drag operation.

Specifically, when the drag operation is performed on the first interface for the target file, the first device sends a broadcast message to notify another device in the system that the target file is to be shared and notify the another device to distinguish a source of the target file, so that all the devices in the system monitor the release position of the drag operation. This can make all the devices in the system get ready to receive the target file. For example, as shown in FIG. 7C, the system includes five electronic devices. The five electronic devices are a computer, a tablet, a mobile phone 1, a mobile phone 2, and a mobile phone 3, respectively. The computer may be used as the first device in the following scenario: The mobile phone 1 establishes a collaboration with the computer, the computer has a collaboration window corresponding to the mobile phone 1, the mobile phone 2 establishes a collaboration with the computer, the computer has a collaboration window corresponding to the mobile phone 2, the computer establishes a collaboration with the tablet, the mobile phone 3 establishes a collaboration with the tablet, and the tablet has a collaboration window corresponding to the mobile phone 3. When the user selects the target file A4 on a display interface of the computer, the computer sends a broadcast message to notify the mobile phone 1, the mobile phone 2, the mobile phone 3, and the tablet in the multi-device collaboration system to start monitoring the release position of the drag operation. In this case, all the devices in the multi-device collaboration system may receive the file A4.

Step S605: The third device receives a notification that is initiated by the first device and that is for monitoring the release position of the first drag operation.

Specifically, the third device is a device corresponding to the release position of the first drag operation. For example, as shown in FIG. 7C, the system includes five electronic devices. The five electronic devices are a computer, a tablet, a mobile phone 1, a mobile phone 2, and a mobile phone 3, respectively. The computer may be used as the first device in the following scenario: The mobile phone 1 establishes a collaboration with the computer, the computer has a collaboration window corresponding to the mobile phone 1, the mobile phone 2 establishes a collaboration with the computer, the computer has a collaboration window corresponding to the mobile phone 2, the computer establishes a collaboration with the tablet, the mobile phone 3 establishes a collaboration with the tablet, and the tablet has a collaboration window corresponding to the mobile phone 3. In the figure, the user initiates a drag operation on a display interface of the computer on the first interface for the file A4. Each of the mobile phone 1, the mobile phone 2, the mobile phone 3, the tablet, and the computer in the multi-device collaboration system may be used as the third device. In this case, when the mobile phone 3 is used as the third device, the mobile phone 3 receives the notification that is initiated by the computer and that is for monitoring the release position of the first drag operation, thereby learning that the file A4 on the computer is to be shared, and getting ready to receive the file A4 at any time.

Step S606: The third device monitors the release position of the first drag operation.

Specifically, after learning that the target file on the first device is to be shared, the third device consistently monitors whether the release position of the first drag operation corresponds to a device of the third device. For example, as shown in FIG. 7C, the system includes five electronic devices. The five electronic devices are a computer, a tablet, a mobile phone 1, a mobile phone 2, and a mobile phone 3, respectively. The computer may be used as the first device in the following scenario: The mobile phone 1 establishes a collaboration with the computer, the computer has a collaboration window corresponding to the mobile phone 1, the mobile phone 2 establishes a collaboration with the computer, the computer has a collaboration window corresponding to the mobile phone 2, the computer establishes a collaboration with the tablet, the mobile phone 3 establishes a collaboration with the tablet, and the tablet has a collaboration window corresponding to the mobile phone 3. In the figure, the user initiates a drag operation on a display interface of the computer on the first interface for the file A4. Each of the mobile phone 1, the mobile phone 2, the mobile phone 3, the tablet, and the computer in the multi-device collaboration system may be used as the third device. When the mobile phone 3 is used as the third device, the mobile phone 3 consistently monitors a position at which the file A4 is released, and receives the file A4 when the file A4 is released on a collaboration window corresponding to the mobile phone 3.

Step S607: The first device detects the release position of the first drag operation.

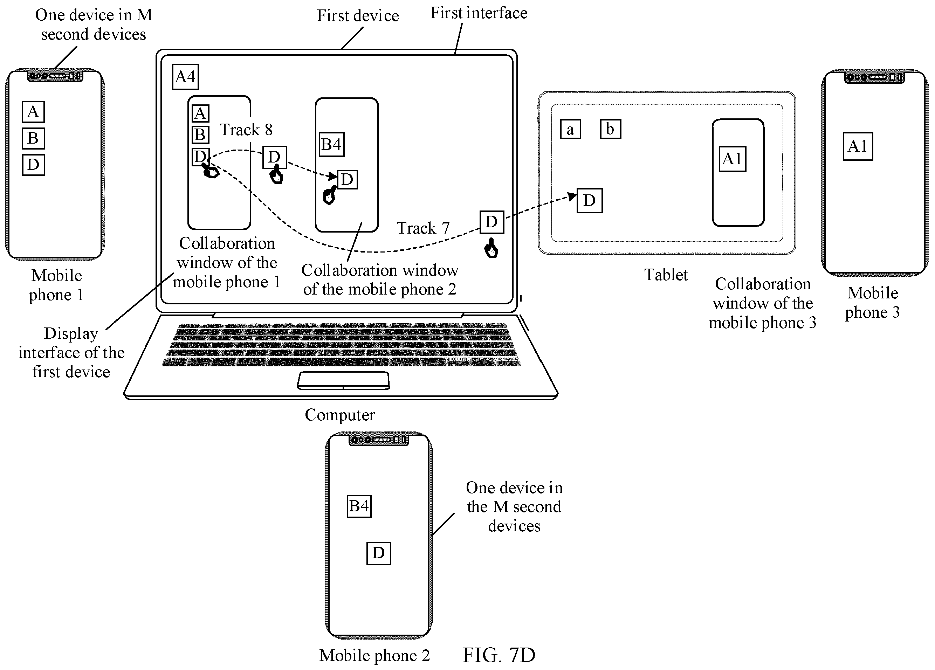

Specifically, the release position may include an interface of any device in the N devices or a collaboration window corresponding to the device. In this case, the third device is a device corresponding to the release position of the first drag operation. As shown in FIG. 7D that is a schematic diagram of a release position of a first drag operation in a multi-device collaboration system (for example, a collaboration system having five devices), a user initiates a drag operation for a file D in a collaboration window that is on the first interface and that corresponds to the mobile phone 1. If the file D is released on a collaboration window corresponding to the mobile phone 2 after being dragged along a track 8, the computer detects that the release position is the collaboration window corresponding to the mobile phone 2, indicating that the file D needs to be sent to the mobile phone 2. If the file C is released on a display interface of the tablet after being dragged along a track 7, the computer detects that the release position is the display interface of the tablet. In this case, the third device is the tablet, indicating that the file D needs to be sent to the tablet.

Step S608: The first device determines a storage path by which a device matching the release position receives the target file.

Specifically, the to-be-shared target file is stored in the determined storage path after being sent to the device matching the release position. In a possible implementation, the method further includes: obtaining file information of the target file, where the file information includes a file name, file content, and file size information of the target file; determining whether the device matching the release position meets a condition for receiving the target file; and determining, if the condition is met, a storage path by which the device matching the release position receives the target file. Specifically, if file transmission between two devices is implemented by performing the drag operation for the target file, a sending device needs to determine whether the third device has enough storage space to store the target file. Optionally, after the sending device obtains the file information of the target file, the sending device first sends a size of the target file to the third device, determines whether the device has space to store the target file, determines a storage path that is for the target file and that is on the third device if the device has enough storage space, and then can send the target file to the storage path. For example, as shown in FIG. 7C, when the user selects the target file A4 on the display interface of the computer and performs a file drag operation for the target file A4, after obtaining a file size of the file A4, the computer sends the file size to another device in the multi-device collaboration system, the another device calculates remaining storage space in advance to determine whether the target file can be received. If it is determined that the target file cannot be received, a prompt is given, indicating that the target file cannot be received. If it is determined that the target file can be received, a prompt is given, indicating that the target file can be received. After receiving a prompt that is from the device matching the release position and that indicates that the device has storage space to store the file A4, the computer may determine a storage path for storing the target file on the device.

Step S609: The first device controls the target file to be sent to the device in the N devices that matches the release position.

Specifically, the controlling the target file to be sent to the device in the N devices that matches the release position includes: sending, by the first device, the target file to the device matching the release position; or controlling, by the first device, another device to send the target file to the device matching the release position.

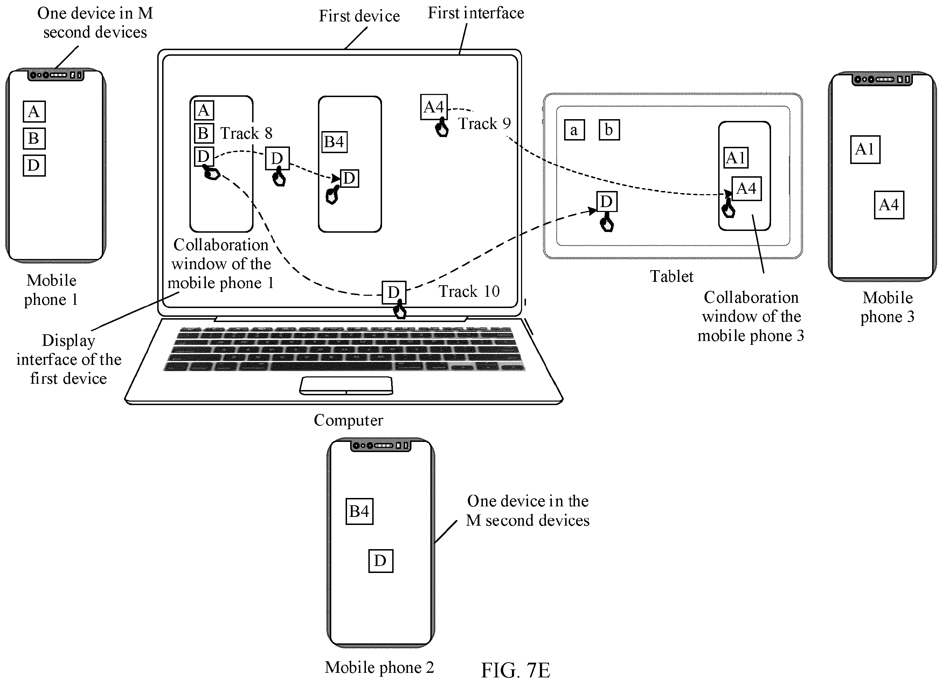

In a possible implementation, the target file is a file stored in the first device. The controlling the target file to be sent to the device in the N devices that matches the release position includes: when it is detected that the release position of the first drag operation is on a display interface of a third device, or when it is detected that the release position of the first drag operation is in a collaboration window that corresponds to the third device and that is on another device in the N devices, controlling the first device to send the target file to the third device, where the third device includes a device that is in the N devices and that does not establish a collaboration with the first device. It should be noted that, after the target file is dragged on the first interface of the first device, if the target file is released on a display interface of any device in the multi-device collaboration system or on a collaboration window corresponding to the device, it is indicated that the target file needs to be sent to the device matching the release position, where the device may not need to establish a collaboration with the first device. For example, as shown in FIG. 7E that is a schematic diagram of dragging a file in a multi-device collaboration system (for example, a collaboration system having five devices), the system includes five electronic devices. The five electronic devices are a computer, a tablet, a mobile phone 1, a mobile phone 2, and a mobile phone 3, respectively. The computer may be used as the first device in the following scenario: The mobile phone 1 establishes a collaboration with the computer, the computer has a collaboration window corresponding to the mobile phone 1, the mobile phone 2 establishes a collaboration with the computer, the computer has a collaboration window corresponding to the mobile phone 2, the computer establishes a collaboration with the tablet, the mobile phone 3 establishes a collaboration with the tablet, and the tablet has a collaboration window corresponding to the mobile phone 3. In the figure, the user selects the target file A4 on a display interface of the computer. The file A4 may be moved along a track 9, and finally released on a collaboration window corresponding to the mobile phone 3.

In a possible implementation, the controlling the first device to send the target file to the third device includes: establishing a data transmission channel, where the data transmission channel is used to transmit the file information of the target file; and if the first device establishes a direct connection to the third device, sending the file information to a storage path of the third device through the data transmission channel; or if the first device establishes an indirect connection to the third device, sending the file information to a relay device through the data transmission channel, and forwarding the file information to a storage path of the third device by using the relay device, where the relay device is a device that establishes both a direct connection to the first device and a direct connection to the third device. Specifically, because different networking technologies are used in the multi-device collaboration system, more devices can be connected without interrupting an inter-device collaboration. However, different networking technologies may have different networking modes, which may cause a change of an inter-device connection relationship. When the first device is used a sending device, and the third device is used a receiving device, the first device and the third device may establish a direct connection or an indirect connection in different networking modes. If the first device establishes a direct connection to the third device (for example, all devices are connected by using an ad hoc networking technology), the first device may directly send the file information of the target file to the third device. If the first device does not establish a direct connection to the third device, but establishes an indirect connection (for example, a one-to-many connection between devices that is implemented by using a WiFi-P2P technology for networking) to the third device by using a relay device (a device that is in the N devices in the multi-device collaboration system and that can establish both a direct connection to the first device and a direct connection to the third device), the first device first sends the file information of the target file to the relay device, and the relay device then forwards the file information of the target file to the third device, thereby implementing file transmission among a plurality of devices. For example, as shown in FIG. 7E, in the figure, the user selects the target file A4 on the display interface of the computer. The file A4 may be moved along the track 9, and finally released on the collaboration window corresponding to the mobile phone 3. In this case, it may be determined that the target file A4 is stored in the computer, and a device that finally receives the file A4 is the mobile phone 3. In the multi-device collaboration system, if networking is performed between the plurality of devices by using a WiFi-P2P technology, the computer cannot establish a direct connection to the mobile phone 3, but the computer can establish a direct connection to the tablet, and the tablet can also establish a direct connection to the mobile phone 3. In this case, the computer may first establish a data transmission channel with the tablet. The computer sends file information of the file A4 to the tablet. Then, the tablet establishes a data transmission channel with the mobile phone 3. The tablet forwards the file information of the file A4 to the mobile phone 3. Optionally, if networking is performed between the plurality of devices by using an ad hoc networking technology, all the devices in the multi-device collaboration system can establish direct connections. In this case, the computer can establish a direct connection to the mobile phone 3, and the computer can directly establish a data transmission channel with the mobile phone 3. The computer directly sends the file information of the file A4 to the mobile phone 3.

In a possible implementation, the target file is a file stored in the start second device in the M second devices. The controlling the target file to be sent to the device in the N devices that matches the release position includes: when it is detected that the release position of the first drag operation is on a display interface of a third device, or when it is detected that the release position of the first drag operation is in a collaboration window that corresponds to the third device and that is on another device in the N devices, controlling the start second device to send the target file to the third device. It should be noted that, after the target file in the collaboration window is dragged on the first interface, if the target file is released on a display interface of any device in the multi-device collaboration system or on a collaboration window corresponding to the device, it is indicated that the target file needs to be sent to the device matching the release position. Optionally, the third device may be one device in the M second devices. For example, as shown in FIG. 7E, in the figure, the user selects the target file D in the collaboration window corresponding to the mobile phone 1. The file D may be moved along the track 8, and finally released on the collaboration window corresponding to the mobile phone 2. It should be noted that in this case, the mobile phone 1 is the start second device; and the mobile phone 2 is the third device. In addition, the user may select the target file D in the collaboration window corresponding to the mobile phone 1, move the file D along a track 10, and finally release the file D on the display interface of the tablet. It should be noted that in this case, the mobile phone 1 is the start second device; and the tablet is the third device.

In a possible implementation, the controlling the start second device to send the target file to the third device includes: establishing a data transmission channel, where the data transmission channel is used to transmit the file information of the target file; and if the start second device establishes a direct connection to the third device, sending, through the data transmission channel, the file information to the storage path of the device matching the release position; or if the start second device establishes an indirect connection to the third device, sending the file information to a relay device through the data transmission channel, and forwarding, the file information to a storage path of the device matching the release position by using the relay device, where the relay device is a device that establishes both a direct connection to the start second device and a direct connection to the third device. In this embodiment of the present invention, because different networking technologies are used in the multi-device collaboration system, more devices can be connected without interrupting an inter-device collaboration. However, different networking technologies may have different networking modes, which may cause a change of an inter-device connection relationship. When the start second device is used as a sending device (a device storing the target file, such as the first device or one of the M second devices), the start second device and the third device may establish a direct connection or an indirect connection in different networking modes. If the start second device can establish a direct connection to the third device (for example, networking is performed by using an ad hoc networking technology), the start second device can directly send the file information of the target file to the third device. If the start second device does not establish a direct connection to the third device, but establishes an indirect connection (for example, a one-to-many connection between devices that is implemented by using a WiFi-P2P technology for networking) to the third device by using a relay device (for example, the first device), the start second device first sends the file information of the target file to the relay device, and the relay device then forwards the file information of the target file to the third device, thereby implementing file transmission among a plurality of devices. For example, as shown in FIG. 7E that is a schematic diagram of dragging a file in a system having five devices, the user selects the target file D in the collaboration window corresponding to the mobile phone 1. The file D may be moved along the track 8, and finally released on the collaboration window corresponding to the mobile phone 2. It should be noted that, in the foregoing example, the start second device is the mobile phone 1, and the third device is the mobile phone 2. In this case, it may be determined that the target file D is stored in the mobile phone 1, and a device that finally receives the file D is the mobile phone 2. In the multi-device collaboration system, if networking is performed between the plurality of devices by using a WiFi-P2P technology, the mobile phone 1 cannot establish a direct connection to the mobile phone 2, but the mobile phone 1 can establish a direct connection to the computer, and the computer can also establish a direct connection to the mobile phone 2. In this case, the mobile phone 1 may first establish a data transmission channel with the computer. The mobile phone 1 sends file information of the file D to the computer. Then, the computer establishes a data transmission channel with the mobile phone 2. The computer forwards the file information of the file D to the mobile phone 2. Optionally, if networking is performed between the plurality of devices by using an ad hoc networking technology, all the devices in the multi-device collaboration system can establish direct connections. In this case, the mobile phone 1 can establish a direct connection to the mobile phone 2, and the mobile phone 1 can directly establish a data transmission channel with the mobile phone 2. The mobile phone 1 directly sends the file information of the file D to the mobile phone 2.

Step S6010: The third device receives the target file that is sent under control of the first device.

Specifically, after the first device controls the target file to be sent to the third device, the third device may store the target file. In a possible implementation, the receiving the target file that is sent under control of the first device includes: establishing a data transmission channel with a device that stores the target file; and receiving file information of the target file, where the file information includes a file name, file content, and file size information of the target file. It should be noted that, the third device receives the size information that is sent by a sending device and that is of the target file. After it is determined that the third device has enough space to receive the target file, the third device can receive the file information of the target file. For example, as shown in FIG. 7E, if the user selects the file D on the first interface, drags the file D along the track 8, and releases the drag operation in the collaboration window corresponding to the mobile phone 2, the mobile phone 2 is used as the third device, and the computer controls the mobile phone 1 to send the file D to the mobile phone 2. The mobile phone 2 receives the file D and stores the file D locally.

Step S6011: The third device sends a broadcast to notify another device in the multi-device collaboration system that the target file has been successfully received.

Specifically, after successfully receiving the target file, the third device sends the broadcast to notify the another device in the multi-device collaboration system that the target file has been successfully received and that the another device does not need to wait for receiving any more. For example, as shown in FIG. 7E, if the user selects the file D on the first interface, drags the file D along the track 8, and releases the drag operation in the collaboration window corresponding to the mobile phone 2, the mobile phone 2 is used as the third device, and the computer controls the mobile phone 1 to send the file D to the mobile phone 2. After successfully receiving the file D, the mobile phone 2 notifies the mobile phone 1, the computer, the tablet, and the mobile phone 3 in the multi-device collaboration system that the file D has been successfully received and that a wait for receiving is not required any more.

The foregoing describes in detail the method in embodiments of the present invention. The following provides a related apparatus in embodiments of the present invention.

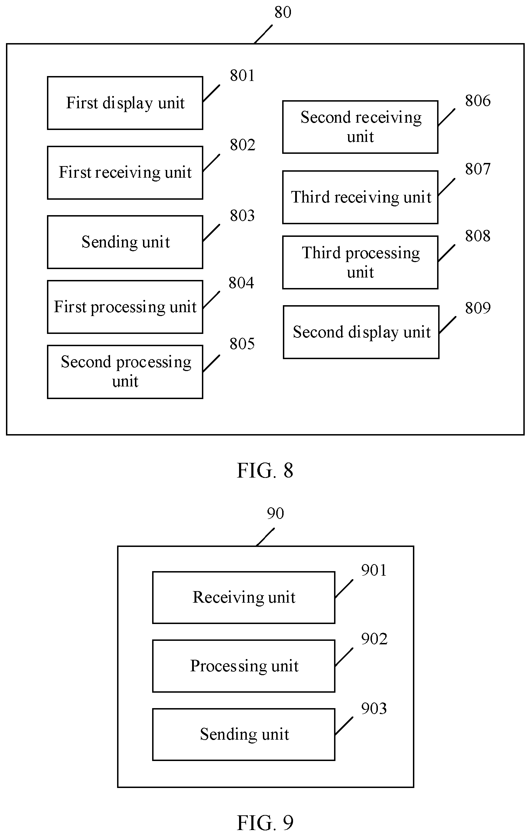

FIG. 8 is a schematic diagram of a structure of a file transmission apparatus according to an embodiment of the present invention. The file transmission apparatus 80 may include a first display unit 801, a first receiving unit 802, a sending unit 803, a first processing unit 804, a second processing unit 805, a second receiving unit 806, a third receiving unit 807, a third processing unit 808, and a second display unit 809. Detailed descriptions of the modules are as follows:

The file transmission apparatus 80 is used in a first device in a multi-device collaboration system. The multi-device collaboration system includes N devices. Any device in the N devices establishes a collaboration with at least one another device in the N devices. The first device is any device in the N devices. N is an integer greater than 2. The apparatus includes:
the first display unit 801, used by the first device for displaying a first interface, where the first interface includes a display interface of the first device and a collaboration window corresponding to M second devices that establish a collaboration with the first device, and M is an integer greater than or equal to 0;
the first receiving unit 802, configured to receive a first drag operation performed on the first interface for a target file;
the sending unit 803, configured to notify another device in the N devices to monitor a release position of the first drag operation, where the release position includes an interface of any device in the N devices or the collaboration window; and
the first processing unit 804, configured to detect the release position of the first drag operation.

The sending unit 803 is further configured to control the target file to be sent to a device in the N devices that matches the release position.

In a possible implementation, the target file is a file stored in the first device. The first processing unit 804 is specifically configured to: when it is detected that the release position of the first drag operation is on a display interface of a third device, or when it is detected that the release position of the first drag operation is in a collaboration window that corresponds to the third device and that is on another device in the N devices, control the first device to send the target file to the third device, where the third device includes a device that is in the N devices and that does not establish a collaboration with the first device. In a possible implementation, the apparatus further includes: the second receiving unit 806, configured to obtain file information of the target file, where the file information includes a file name, file content, and file size information of the target file; and the second processing unit, configured to: determine whether the device matching the release position meets a condition for receiving the target file; and determine, if the condition is met, a storage path by which the device matching the release position receives the target file. In a possible implementation, the first processing unit 804 is further configured to establish a data transmission channel, where the data transmission channel is used to transmit the file information of the target file; and the sending unit 803 is further configured to: if the first device establishes a direct connection to the third device, send the file information to a storage path of the third device through the data transmission channel; or if the first device establishes an indirect connection to the third device, send the file information to a relay device through the data transmission channel, and forward the file information to a storage path of the third device by using the relay device, where the relay device is a device that establishes both a direct connection to the first device and a direct connection to the third device.

In a possible implementation, the target file is a file stored in a start second device in the M second devices; and the first processing unit 804 is specifically configured to: when it is detected that the release position of the first drag operation is on a display interface of a third device, or when it is detected that the release position of the first drag operation is in a collaboration window that corresponds to the third device and that is on another device in the N devices, control the start second device to send the target file to the third device. In a possible implementation, the first processing unit 804 is further configured to establish a data transmission channel, where the data transmission channel is used to transmit the file information of the target file; and the sending unit 803 is further configured to: if the start second device establishes a direct connection to the third device, send the file information to a storage path of the third device through the data transmission channel; or if the start second device establishes an indirect connection to the third device, send the file information to a relay device through the data transmission channel, and forward the file information to a storage path of the third device by using the relay device, where the relay device is a device that establishes both a direct connection to the start second device and a direct connection to the third device. In a possible implementation, the apparatus further includes: the third receiving unit 807, configured to obtain first information of the target file, where the first information includes one or more of file type information, file quantity information, and file arrangement sequence information of the target file; the third processing unit 808, configured to generate a drag effect set of the target file based on the first information; and the second display unit 809, configured to display, based on the drag effect set of the target file, a drag effect matching a fourth device, where the fourth device is a device through which a drag track of the first drag operation passes, or a device corresponding to a collaboration window on the device through which the drag track of the first drag operation passes.

It should be noted that, for functions of functional units in the file transmission apparatus 80 described in this embodiment of the present invention, reference may be made to the related descriptions of step S401, step S402, step S403, step S406, and step S407 in the method embodiment in FIG. 4. Details are not described herein again.

The foregoing describes in detail the method in embodiments of the present invention. The following provides a related apparatus in embodiments of the present invention.

FIG. 9 is a schematic diagram of a structure of another file transmission apparatus according to an embodiment of the present invention. The file transmission apparatus 90 may include a receiving unit 901, a processing unit 902, and a sending unit 903. Detailed descriptions of the modules are as follows: The file transmission apparatus 90 is used in a third device in a multi-device collaboration system. The multi-device collaboration system includes N devices. Any device in the N devices establishes a collaboration with at least one another device in the N devices. The third device is any device in the N devices. N is an integer greater than 2. The apparatus includes:
the receiving unit 901, configured to receive a notification that is initiated by a first device and that is for monitoring a release position of a first drag operation, where the first drag operation is initiating dragging of a target file on a first interface, the first interface includes a display interface of the first device and a collaboration window corresponding to M second devices that establish a collaboration with the first device, and M is an integer greater than or equal to 0; the processing unit 902, configured to monitor the release position of the first drag operation; and the sending unit 903, configured to send a broadcast to notify the another device in the multi-device collaboration system that the target file has been successfully received. The receiving unit 901 is further configured to receive the target file that is sent under control of the first device. In a possible implementation, the processing unit 902 is further configured to establish a data transmission channel with a device that stores the target file; and the receiving unit 901 is further configured to receive file information of the target file, where the file information includes a file name, file content, and file size information of the target file.

It should be noted that, for functions of functional units in the file transmission apparatus 90 described in this embodiment of the present invention, reference may be made to the related descriptions of step S404, step S405, step S408, and step S409 in the method embodiment in FIG. 4. Details are not described herein again.

An embodiment of the present invention further provides a computer storage medium, where the computer storage medium may store a program, and the program, when executed, includes some or all of the steps of any file transmission method recorded in the foregoing method embodiments.

An embodiment of the present invention further provides a computer program. The computer program includes instructions. When the computer program is executed by a computer, the computer is enabled to perform some or all of the steps of any one of the file transmission methods.

In the foregoing embodiments, the embodiments are described with different emphases, and for a part which is not detailed in an embodiment, reference can be made to the related description of the other embodiments.

It should be noted that, for brevity, the foregoing method embodiments are described as a series of action combinations. However, persons skilled in the art should understand that this application is not limited to the described action order, because according to this application, some steps may be performed in another order or simultaneously. Moreover, persons skilled in the art should also understand that the embodiments described in the specification all are preferred embodiments, and the involved actions and modules are not necessarily required by this application.

In the several embodiments provided in this application, it should be understood that the disclosed apparatus may be implemented in other manners. For example, the described apparatus embodiment is merely an example. For example, the unit division is merely logical function division and may be other division in actual implementation. For example, a plurality of units or components may be combined or integrated into another system, or some features may be omitted or not performed. In addition, the mutual coupling or direct coupling or communication connection shown or discussed may be indirect coupling or communication connection through some interfaces, apparatuses, or units, and may be in electrical or other forms.

The foregoing units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in the embodiments of this application may be integrated into one processing unit, or each of the units may exist alone physically, or two or more units may be integrated into one unit. The foregoing integrated unit may be implemented in a form of hardware, or may be implemented in a form of a software function unit.

When the foregoing integrated unit is implemented in the form of a software functional unit and sold or used as an independent product, the integrated unit may be stored in a computer-readable storage medium. Based on such an understanding, the technical solutions of this application essentially, or the part contributing to the prior art, or some or all of the technical solutions may be implemented in the form of a software product. The software product is stored in a storage medium and includes several instructions for instructing a computer device (which may be a personal computer, a server, a network device, or the like, and may be specifically a processor in the computer device) to perform some or all of the steps of the methods described in embodiments of this application. The foregoing storage medium may include any medium that can store program code, such as a USB flash drive, a removable hard disk, a magnetic disk, an optical disc, a read-only memory (Read-Only Memory, ROM for short), or a random access memory (Random Access Memory, RAM for short).

The foregoing embodiments are merely used to describe the technical solutions of this application, but are not intended to limit this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of the embodiments of this application.

## Claims

1. A file transmission method implemented by a first device in a multi-device collaboration system, wherein the multi-device collaboration system comprises N devices, any device in the N devices establishes a collaboration with at least one another device in the N devices, the first device is any device in the N devices, N is an integer greater than 2, and the method comprises:
displaying (S401), by the first device, a first interface, wherein the first interface comprises a display interface of the first device and a collaboration window corresponding to M second devices that establish a collaboration with the first device, and M is an integer greater than or equal to 0;
receiving (S402) a first drag operation performed on the first interface for a target file;
sending a broadcast message to notify (S403) another device in the N devices to monitor a release position of the first drag operation, wherein the release position comprises an interface of any device in the N devices or the collaboration window;
detecting (S406) the release position of the first drag operation; and
controlling (S407) the target file to be sent to a device in the N devices that matches the release position.

2. The method according to claim 1, wherein the target file is a file stored in the first device, and a start position of the first drag operation is on the display interface; or
the target file is a file stored in a start second device in the M second devices, and a start position of the first drag operation is in a collaboration window corresponding to the start second device.

3. The method according to claim 1 or 2, wherein the target file is a file stored in the first device, and the controlling the target file to be sent to a device in the N devices that matches the release position comprises:
when it is detected that the release position of the first drag operation is on a display interface of a third device, or when it is detected that the release position of the first drag operation is in a collaboration window that corresponds to the third device and that is on another device in the N devices, controlling the first device to send the target file to the third device, wherein the third device comprises a device that is in the N devices and that does not establish a collaboration with the first device.

4. The method according to any one of claims 1 to 3, wherein the method further comprises:
obtaining file information of the target file, wherein the file information comprises a file name, file content, and file size information of the target file;
determining whether the device matching the release position meets a condition for receiving the target file; and
determining (S608), if the condition is met, a storage path by which the device matching the release position receives the target file.

5. The method according to claim 3 or 4, wherein the controlling the first device to send the target file to the third device comprises:
establishing a data transmission channel, wherein the data transmission channel is used to transmit the file information of the target file; and
if the first device establishes a direct connection to the third device, sending the file information to a storage path of the third device through the data transmission channel; or
if the first device establishes an indirect connection to the third device, sending the file information to a relay device through the data transmission channel, and forwarding the file information to a storage path of the third device by using the relay device, wherein the relay device is a device that establishes both a direct connection to the first device and a direct connection to the third device.

6. The method according to claim 1 or 2, wherein the target file is a file stored in the start second device in the M second devices, and the controlling the target file to be sent to a device in the N devices that matches the release position comprises:
when it is detected that the release position of the first drag operation is on a display interface of a third device, or when it is detected that the release position of the first drag operation is in a collaboration window that corresponds to the third device and that is on another device in the N devices, controlling the start second device to send the target file to the third device.

7. The method according to claim 4 or 6, wherein the controlling the start second device to send the target file to the third device comprises:
establishing a data transmission channel, wherein the data transmission channel is used to transmit the file information of the target file; and
if the start second device establishes a direct connection to the third device, sending the file information to a storage path of the third device through the data transmission channel; or
if the start second device establishes an indirect connection to the third device, sending the file information to a relay device through the data transmission channel, and forwarding the file information to a storage path of the third device by using the relay device, wherein the relay device is a device that establishes both a direct connection to the start second device and a direct connection to the third device.

8. The method according to any one of claims 1 to 7, wherein the method further comprises:
obtaining first information of the target file, wherein the first information comprises one or more of file type information, file quantity information, and file arrangement sequence information of the target file;
generating a drag effect set of the target file based on the first information; and
displaying (S603), based on the drag effect set of the target file, a drag effect matching a fourth device, wherein the fourth device is a device through which a drag track of the first drag operation passes, or a device corresponding to a collaboration window on the device through which the drag track of the first drag operation passes.

9. A file transmission method implemented by a third device in a multi-device collaboration system, wherein the multi-device collaboration system comprises N devices, any device in the N devices establishes a collaboration with at least one another device in the N devices, the third device is any device in the N devices, N is an integer greater than 2, and the method comprises:
receiving (S404) a broadcast message notification that is initiated by a first device and that is for monitoring a release position of a first drag operation, wherein the first drag operation is initiating dragging of a target file on a first interface, the first interface comprises a display interface of the first device and a collaboration window corresponding to M second devices that establish a collaboration with the first device, and M is an integer greater than or equal to 0;
monitoring (S405) the release position of the first drag operation;
receiving (S408) the target file that is sent under control of the first device; and
sending (S409) a broadcast message to notify another device in the multi-device collaboration system that the target file has been successfully received.

10. The method according to claim 9, wherein the receiving the target file that is sent under control of the first device comprises:
establishing a data transmission channel with a device that stores the target file; and
receiving file information of the target file, wherein the file information comprises a file name, file content, and file size information of the target file;

11. An electronic device, comprising a processor, a memory, and a communication interface, wherein the memory is configured to store information sending program code, and the processor is configured to invoke the file transmission program code to perform the method according to any one of claims 1 to 8 or claims 9 and 10.

12. A computer storage medium, wherein the computer storage medium stores a computer program, and when the computer program is executed by a processor, the method according to any one of claims 1 to 8 or claims 9 and 10 is implemented.

## Patentansprüche

1. Dateiübertragungsverfahren, das durch eine erste Vorrichtung in einem Multi-Vorrichtungs-Kollaborationssystem implementiert ist, wobei das Multi-Vorrichtungs-Kollaborationssystem N Vorrichtungen umfasst, jede Vorrichtung unter den N Vorrichtungen eine Kollaboration mit mindestens einer anderen Vorrichtung unter den N Vorrichtungen einrichtet, die erste Vorrichtung eine beliebige Vorrichtung unter den N Vorrichtungen ist, N eine Ganzzahl größer als 2 ist und das Verfahren Folgendes umfasst:
Anzeigen (S401), durch die erste Vorrichtung, einer ersten Schnittstelle, wobei die erste Schnittstelle eine Anzeigeschnittstelle der ersten Vorrichtung und ein Kollaborationsfenster umfasst, das M zweiten Vorrichtungen entspricht, die eine Kollaboration mit der ersten Vorrichtung einrichten, und M eine Ganzzahl größer oder gleich 0 ist;
Empfangen (S402) eines ersten Drag-Vorgangs, der auf der ersten Schnittstelle für eine Zieldatei durchgeführt wird;
Senden einer Broadcast-Nachricht, um eine andere Vorrichtung unter den N Vorrichtungen zu benachrichtigen (S403), damit sie eine Freigabeposition des ersten Drag-Vorgangs überwacht, wobei die Freigabeposition eine Schnittstelle einer beliebigen Vorrichtung unter den N Vorrichtungen oder des Kollaborationsfensters umfasst;
Erkennen (S406) der Freigabeposition des ersten Drag-Vorgangs;
und
Steuern (S407) der Zieldatei, die an eine Vorrichtung unter den N Vorrichtungen, die der Freigabeposition entspricht, zu senden ist.

2. Verfahren nach Anspruch 1, wobei die Zieldatei eine Datei ist, die in der ersten Vorrichtung gespeichert ist, und eine Startposition des ersten Drag-Vorgangs auf der Anzeigeschnittstelle liegt; oder
die Zieldatei eine Datei ist, die in einer zweiten Startvorrichtung unter den M zweiten Vorrichtungen gespeichert ist, und eine Startposition des ersten Drag-Vorgangs in einem Kollaborationsfenster liegt, das der zweiten Startvorrichtung entspricht.

3. Verfahren nach Anspruch 1 oder 2, wobei die Zieldatei eine Datei ist, die in der ersten Vorrichtung gespeichert ist und das Steuern der Zieldatei, die an eine Vorrichtung unter den N Vorrichtungen, die der Freigabeposition entspricht, zu senden ist, Folgendes umfasst:
wenn erkannt wird, dass die Freigabeposition des ersten Drag-Vorgangs auf einer Anzeigeschnittstelle einer dritten Vorrichtung liegt, oder wenn erkannt wird, dass die Freigabeposition des ersten Drag-Vorgangs in einem Kollaborationsfenster liegt, das der dritten Vorrichtung entspricht und das auf einer anderen Vorrichtung unter den N Vorrichtungen liegt, Steuern der ersten Vorrichtung derart, dass sie die Zieldatei an die dritte Vorrichtung sendet, wobei die dritte Vorrichtung eine Vorrichtung umfasst, die sich unter den N Vorrichtungen befindet und die keine Kollaboration mit der ersten Vorrichtung einrichtet.

4. Verfahren nach einem der Ansprüche 1 bis 3, wobei das Verfahren ferner Folgendes umfasst:
Erlangen von Dateiinformationen der Zieldatei, wobei die Dateiinformationen Dateinamen-, Dateiinhalts- und Dateigrößen-Informationen der Zieldatei umfassen;
Bestimmen, ob die Vorrichtung, die der Freigabeposition entspricht, eine Bedingung zum Empfangen der Zieldatei erfüllt;
und
Bestimmen (S608), falls die Bedingung erfüllt ist, eines Speicherpfads, über den die Vorrichtung, die der Freigabeposition entspricht, die Zieldatei empfängt.

5. Verfahren nach Anspruch 3 oder 4, wobei das Steuern der ersten Vorrichtung derart, dass sie die Zieldatei an die dritte Vorrichtung sendet, Folgendes umfasst:
Einrichten eines Datenübertragungskanals, wobei der Datenübertragungskanal dazu verwendet wird, die Dateiinformationen der Zieldatei zu übertragen; und,
wenn die erste Vorrichtung eine direkte Verbindung zu der dritten Vorrichtung einrichtet, Senden der Dateiinformationen an einen Speicherpfad der dritten Vorrichtung über den Datenübertragungskanal; oder,
wenn die erste Vorrichtung eine indirekte Verbindung zu der dritten Vorrichtung einrichtet, Senden der Dateiinformationen an eine Relaisvorrichtung über den Datenübertragungskanal und Weiterleiten der Dateiinformationen an einen Speicherpfad der dritten Vorrichtung unter Verwendung der Relaisvorrichtung, wobei die Relaisvorrichtung eine Vorrichtung ist, die sowohl eine direkte Verbindung zu der ersten Vorrichtung als auch eine direkte Verbindung zu der dritten Vorrichtung einrichtet.

6. Verfahren nach Anspruch 1 oder 2, wobei die Zieldatei eine Datei ist, die in der zweiten Startvorrichtung unter den M zweiten Vorrichtungen gespeichert ist und das Steuern der Zieldatei, die an eine Vorrichtung unter den N Vorrichtungen, die der Freigabeposition entspricht, zu senden ist, Folgendes umfasst:
wenn erkannt wird, dass die Freigabeposition des ersten Drag-Vorgangs auf einer Anzeigeschnittstelle einer dritten Vorrichtung liegt, oder wenn erkannt wird, dass die Freigabeposition des ersten Drag-Vorgangs in einem Kooperationsfenster liegt, das der dritten Vorrichtung entspricht und das auf einer anderen Vorrichtung unter den N-Vorrichtungen liegt, Steuern der zweiten Startvorrichtung derart, dass sie die Zieldatei an die dritte Vorrichtung sendet.

7. Verfahren nach Anspruch 4 oder 6, wobei das Steuern der zweiten Startvorrichtung derart, dass sie die Zieldatei an die dritte Vorrichtung sendet, Folgendes umfasst:
Einrichten eines Datenübertragungskanals, wobei der Datenübertragungskanal dazu verwendet wird, die Dateiinformationen der Zieldatei zu übertragen; und,
wenn die zweite Startvorrichtung eine direkte Verbindung zu der dritten Vorrichtung einrichtet, Senden der Dateiinformationen an einen Speicherpfad der dritten Vorrichtung über den Datenübertragungskanal; oder,
wenn die zweite Startvorrichtung eine indirekte Verbindung zu der dritten Vorrichtung einrichtet, Senden der Dateiinformationen an eine Relaisvorrichtung über den Datenübertragungskanal und Weiterleiten der Dateiinformationen an einen Speicherpfad der dritten Vorrichtung unter Verwendung der Relaisvorrichtung, wobei die Relaisvorrichtung eine Vorrichtung ist, die sowohl eine direkte Verbindung zu der zweiten Startvorrichtung als auch eine direkte Verbindung zu der dritten Vorrichtung einrichtet.

8. Verfahren nach einem der Ansprüche 1 bis 7, wobei das Verfahren ferner Folgendes umfasst:
Erlangen erster Informationen der Zieldatei, wobei die ersten Informationen eine oder mehrere aus Dateityp-Informationen, Dateianzahl-Informationen und Dateianordnungssequenz-Informationen der Zieldatei umfassen;
Erzeugen eines Drag-Effekt-Satzes der Zieldatei basierend auf den ersten Informationen; und
Anzeigen (S603), basierend auf dem Drag-Effekt-Satz der Zieldatei, eines Drag-Effekts, der zu einer vierten Vorrichtung passt, wobei es sich bei der vierten Vorrichtung um eine Vorrichtung handelt, durch die eine Drag-Spur des ersten Drag-Vorgangs verläuft, oder um eine Vorrichtung handelt, die einem Kollaborationsfenster auf der Vorrichtung entspricht, durch die die Drag-Spur des ersten Drag-Vorgangs verläuft.

9. Dateiübertragungsverfahren, das durch eine dritte Vorrichtung in einem Multi-Vorrichtungs-Kollaborationssystem implementiert ist, wobei das Multi-Vorrichtungs-Kollaborationssystem N Vorrichtungen umfasst, jede Vorrichtung unter den N Vorrichtungen eine Kollaboration mit mindestens einer anderen Vorrichtung unter den N Vorrichtungen einrichtet, die dritte Vorrichtung eine beliebige Vorrichtung unter den N Vorrichtungen ist, N eine Ganzzahl größer als 2 ist und das Verfahren Folgendes umfasst:
Empfangen (S404) einer Broadcast-Nachrichten-Benachrichtigung, die durch eine erste Vorrichtung initiiert wird und die einem Überwachen einer Freigabeposition eines ersten Drag-Vorgangs dient, wobei der erste Drag-Vorgang Initiieren von Ziehen einer Zieldatei auf einer ersten Schnittstelle bedeutet, die erste Schnittstelle eine Anzeigeschnittstelle der ersten Vorrichtung und ein Kollaborationsfenster umfasst, das M zweiten Vorrichtungen entspricht, die eine Kollaboration mit der ersten Vorrichtung einrichten, wobei M eine Ganzzahl größer oder gleich 0 ist;
Überwachen (S405) der Freigabeposition des ersten Drag-Vorgangs; Empfangen (S408) der Zieldatei, die unter Steuerung der ersten Vorrichtung gesendet wird; und
Senden (S409) einer Broadcast-Nachricht, um eine andere Vorrichtung in dem Multi-Vorrichtungs-Kollaborationssystem darüber zu informieren, dass die Zieldatei erfolgreich empfangen wurde.

10. Verfahren nach Anspruch 9, wobei das Empfangen der Zieldatei, die unter Steuerung der ersten Vorrichtung gesendet wird, Folgendes umfasst:
Einrichten eines Datenübertragungskanals mit einer Vorrichtung, welche die Zieldatei speichert; und
Empfangen von Dateiinformationen der Zieldatei, wobei die Dateiinformationen Dateinamen-, Dateiinhalts- und Dateigrößen-Informationen der Zieldatei umfassen.

11. Elektronische Vorrichtung, umfassend einen Prozessor, einen Speicher und eine Kommunikationsschnittstelle, wobei der Speicher dazu konfiguriert ist, Informationen, die Programmcode senden, zu speichern, und der Prozessor dazu konfiguriert ist, den Datenübertragungsprogrammcode aufzurufen, um das Verfahren nach einem der Ansprüche 1 bis 8 oder der Ansprüche 9 und 10 durchzuführen.

12. Computerspeichermedium, wobei das Computerspeichermedium ein Computerprogramm speichert und, wenn das Computerprogramm durch einen Prozessor ausgeführt wird, das Verfahren nach einem der Ansprüche 1 bis 8 oder der Ansprüche 9 und 10 umgesetzt wird.

## Revendications

1. Procédé de transmission de fichiers mis en œuvre par un premier dispositif dans un système de collaboration multi-dispositifs, dans lequel le système de collaboration multi-dispositifs comprend N dispositifs, un dispositif quelconque parmi les N dispositifs établit une collaboration avec au moins un autre dispositif parmi les N dispositifs, le premier dispositif est un dispositif quelconque parmi les N dispositifs, N est un entier supérieur à 2, et le procédé comprend :
l'affichage (S401), par le premier dispositif, d'une première interface, dans lequel la première interface comprend une interface d'affichage du premier dispositif et une fenêtre de collaboration correspondant à M deuxièmes dispositifs qui établissent une collaboration avec le premier dispositif, et M est un entier supérieur ou égal à 0 ;
la réception (S402) d'une première opération de glissement réalisée sur la première interface pour un fichier cible ;
l'envoi d'un message de diffusion pour notifier (S403) un autre dispositif parmi les N dispositifs de surveiller une position de relâchement de la première opération de glissement, dans lequel la position de relâchement comprend une interface d'un dispositif quelconque parmi les N dispositifs ou la fenêtre de collaboration ;
la détection (S406) de la position de relâchement de la première opération de glissement ; et
la commande (S407) du fichier cible à envoyer à un dispositif parmi les N dispositifs qui correspond à la position de relâchement.

2. Procédé selon la revendication 1, dans lequel le fichier cible est un fichier stocké dans le premier dispositif, et une position de départ de la première opération de glissement se trouve sur l'interface d'affichage ; ou
le fichier cible est un fichier stocké dans un deuxième dispositif de départ parmi les M deuxièmes dispositifs, et une position de départ de la première opération de glissement se trouve dans une fenêtre de collaboration correspondant au deuxième dispositif de départ.

3. Procédé selon la revendication 1 ou 2, dans lequel le fichier cible est un fichier stocké dans le premier dispositif, et la commande du fichier cible à envoyer à un dispositif parmi les N dispositifs qui correspond à la position de relâchement comprend :
lorsqu'il est détecté que la position de relâchement de la première opération de glissement se trouve sur une interface d'affichage d'un troisième dispositif, ou lorsqu'il est détecté que la position de relâchement de la première opération de glissement se trouve dans une fenêtre de collaboration qui correspond au troisième dispositif et qui se trouve sur un autre dispositif parmi les N dispositifs, la commande du premier dispositif pour envoyer le fichier cible au troisième dispositif, dans lequel le troisième dispositif comprend un dispositif qui se trouve parmi les N dispositifs et qui n'établit pas de collaboration avec le premier dispositif.

4. Procédé selon l'une quelconque des revendications 1 à 3, dans lequel le procédé comprend également :
l'obtention d'informations de fichier du fichier cible, dans lequel les informations de fichier comprennent un nom de fichier, un contenu de fichier et des informations de taille de fichier du fichier cible ;
le fait de déterminer si le dispositif correspondant à la position de relâchement remplit une condition pour recevoir le fichier cible ; et
la détermination (S608), si la condition est remplie, d'un chemin de stockage par lequel le dispositif correspondant à la position de relâchement reçoit le fichier cible.

5. Procédé selon la revendication 3 ou 4, dans lequel la commande du premier dispositif pour envoyer le fichier cible au troisième dispositif comprend :
l'établissement d'un canal de transmission de données, dans lequel le canal de transmission de données est utilisé pour transmettre les informations de fichier du fichier cible ; et
si le premier dispositif établit une connexion directe avec le troisième dispositif, l'envoi des informations de fichier à un chemin de stockage du troisième dispositif via le canal de transmission de données ; ou
si le premier dispositif établit une connexion indirecte avec le troisième dispositif, l'envoi des informations de fichier à un dispositif relais via le canal de transmission de données, et le transfert des informations de fichier vers un chemin de stockage du troisième dispositif à l'aide du dispositif relais, dans lequel le dispositif relais est un dispositif qui établit à la fois une connexion directe avec le premier dispositif et une connexion directe avec le troisième dispositif.

6. Procédé selon la revendication 1 ou 2, dans lequel le fichier cible est un fichier stocké dans le deuxième dispositif de départ parmi les M deuxièmes dispositifs, et la commande du fichier cible à envoyer à un dispositif parmi les N dispositifs qui correspond à la position de relâchement comprend :
lorsqu'il est détecté que la position de relâchement de la première opération de glissement se trouve sur une interface d'affichage d'un troisième dispositif, ou lorsqu'il est détecté que la position de relâchement de la première opération de glissement se trouve dans une fenêtre de collaboration qui correspond au troisième dispositif et qui se trouve sur un autre dispositif parmi les N dispositifs, la commande du deuxième dispositif de départ pour envoyer le fichier cible au troisième dispositif.

7. Procédé selon la revendication 4 ou 6, dans lequel la commande du deuxième dispositif de départ pour envoyer le fichier cible au troisième dispositif comprend :
l'établissement d'un canal de transmission de données, dans lequel le canal de transmission de données est utilisé pour transmettre les informations de fichier du fichier cible ; et
si le deuxième dispositif de départ établit une connexion directe avec le troisième dispositif, l'envoi des informations de fichier à un chemin de stockage du troisième dispositif via le canal de transmission de données ; ou
si le deuxième dispositif de départ établit une connexion indirecte avec le troisième dispositif, l'envoi des informations de fichier à un dispositif relais via le canal de transmission de données, et le transfert des informations de fichier vers un chemin de stockage du troisième dispositif à l'aide du dispositif relais, dans lequel le dispositif relais est un dispositif qui établit à la fois une connexion directe avec le deuxième dispositif de départ et une connexion directe avec le troisième dispositif.

8. Procédé selon l'une quelconque des revendications 1 à 7, dans lequel le procédé comprend également :
l'obtention de premières informations du fichier cible, dans lequel les premières informations comprennent une ou plusieurs des informations de type de fichier, des informations de quantité de fichiers et des informations de séquence d'agencement de fichier du fichier cible ;
la génération d'un ensemble d'effets de glissement du fichier cible sur la base des premières informations ; et
l'affichage (S603), sur la base de l'ensemble d'effets de glissement du fichier cible, d'un effet de glissement correspondant à un quatrième dispositif, dans lequel le quatrième dispositif est un dispositif à travers lequel passe un chemin de glissement de la première opération de glissement, ou un dispositif correspondant à une fenêtre de collaboration sur le dispositif à travers lequel passe le chemin de glissement de la première opération de glissement.

9. Procédé de transmission de fichiers mis en œuvre par un troisième dispositif dans un système de collaboration multi-dispositifs, dans lequel le système de collaboration multi-dispositifs comprend N dispositifs, un dispositif quelconque parmi les N dispositifs établit une collaboration avec au moins un autre dispositif parmi les N dispositifs, le troisième dispositif est un dispositif quelconque parmi les N dispositifs, N est un entier supérieur à 2, et le procédé comprend :
la réception (S404) d'une notification de message de diffusion qui est initiée par un premier dispositif et qui est destinée à surveiller une position de relâchement d'une première opération de glissement, dans lequel la première opération de glissement est le fait d'initier le glissement d'un fichier cible sur une première interface, la première interface comprend une interface d'affichage du premier dispositif et une fenêtre de collaboration correspondant à M deuxièmes dispositifs qui établissent une collaboration avec le premier dispositif, et M est un entier supérieur ou égal à 0 ;
la surveillance (S405) de la position de relâchement de la première opération de glissement ;
la réception (S408) du fichier cible qui est envoyé sous la commande du premier dispositif ; et
l'envoi (S409) d'un message de diffusion pour notifier à un autre dispositif dans le système de collaboration multi-dispositifs que le fichier cible a été reçu avec succès.

10. Procédé selon la revendication 9, dans lequel la réception du fichier cible qui est envoyé sous la commande du premier dispositif comprend :
l'établissement d'un canal de transmission de données avec un dispositif qui stocke le fichier cible ; et
la réception d'informations de fichier du fichier cible, dans lequel les informations de fichier comprennent un nom de fichier, un contenu de fichier et des informations de taille de fichier du fichier cible.

11. Dispositif électronique, comprenant un processeur, une mémoire et une interface de communication, dans lequel la mémoire est configurée pour stocker un code de programme d'envoi d'informations, et le processeur est configuré pour invoquer le code de programme de transmission de fichier pour réaliser le procédé selon l'une quelconque des revendications 1 à 8 ou des revendications 9 et 10.

12. Support de stockage informatique, dans lequel le support de stockage informatique stocke un programme informatique, et lorsque le programme informatique est exécuté par un processeur, le procédé selon l'une quelconque des revendications 1 à 8 ou des revendications 9 et 10 est mis en œuvre.
